# EUROPEAN PATENT SPECIFICATION

(11) **EP 3 732 491 B1**
(45) Date of publication and mention of the grant of the patent: **06.11.2024**
(21) Application number: 18837120.7
(22) Date of filing: 28.12.2018
(51) Int. Cl.: G01N 35/10

(54) **SAMPLE ANALYSIS SYSTEM COMPRISING A PROBE WASHING ARRANGEMENT AND METHOD OF USING IT**
PROBENANALYSESYSTEM MIT EINER SONDENWASCHANORDNUNG UND VERFAHREN ZU SEINER VERWENDUNG
SYSTEME D'ANALYSE D'ECHANTILLON COMPRENANT UN AGENCEMENT DE LAVAGE DE SONDE ET SON PROCEDE D'UTILISATION

(30) Priority: 29.12.2017 US 201762612054 P
(43) Date of publication of application: 04.11.2020
(73) Proprietor: Beckman Coulter, Inc., Brea, CA 92821 (US)
(72) Inventor: HOFMANN, Nicholas, M., Shorewood, MN 55331 (US); HOLMES, Laura, E., Brea, CA 92821-6232 (US); THOMPSON, Creigh, R., Brea, CA 92821-6232 (US)
(74) Representative: Müller-Boré & Partner Patentanwälte PartG mbB
(86) International application number: PCT/US2018/067948
(87) International publication number: WO 2019/133865

(56) References cited:
- EP-A1- 3 153 864
- EP-A2- 0 661 542
- US-A1- 2004 194 562

## Description

This application is being filed on December 28, 2018, as a PCT International Patent application and claims the benefit of priority to U.S. Provisional patent application Serial No. 62/612,054, filed December 29, 2017.

### BACKGROUND

Automated clinical analyzers are well known in the art and are generally used for the automated or semi-automated analysis of patient samples. Typically, prepared patient samples, such as blood, urine, spinal fluid, and the like are placed onto such an analyzer in sample containers such a test tubes. The analyzer pipettes a patient sample and one or more reagents to a reaction cell (e.g., a reaction vessel, cuvette or flow cell) where an analysis of the sample is conducted, usually for a particular analyte of interest, and results of the analysis are reported.

Automated pipettors are employed on such analyzers to transfer the patient samples and reagents as required for the specified analysis. Such pipettors can include a hollow probe having an open end or tip. The hollow probe is, for example, lowered into a sample container that holds a sample, a predetermined volume of the sample is withdrawn from the sample container, and the hollow probe is withdrawn from the sample container. The probe is moved, for example, to a position above a reaction cell, is again lowered, and the sample held in the hollow probe is expelled into the reaction cell. Similar actions may be used to pipette and deliver one or more reagents from reagent containers to the reaction cell, either with the same probe or with one or more reagent delivery probes.

Such hollow probes may be used to clean (i.e., rinse) the reaction cell at various stages of the analysis.

To prepare such a hollow probe for a subsequent delivery, the hollow probe may be washed to eliminate, as much as possible, any residue from the prior samples and/or reagents that were handled by the hollow probe. Probe washing may be accomplished by, for example, lowering the probe tip into a wash cell that contains a wash fluid such as water. The wash fluid washes an exterior of the probe tip, and an interior of the hollow probe may be cleaned by aspirating and discharging the wash fluid or, alternatively, discharging a wash fluid through the hollow probe into the wash cell.

A common problem with hollow probe washing, however, is carryover, that is, residual fluid or contaminates from a fluid that remain on or in or may be absorbed by the hollow probe despite washing. This residue mixes with subsequent sample or reagents drawn into the hollow probe and can interfere with subsequent analyses.

Another problem with hollow probe washing is the time needed to move the hollow probe to a wash station and accomplish the probe washing. Substantial time can be required to wash the hollow probe. For example, if the hollow probe has delivered a sample to a reaction cell, the hollow probe must be raised, moved to a position over a wash cell, and lowered into the cell for washing. Once washing is done, the hollow probe must again be raised and moved on to the next operation. Such cleaning of hollow probes may require that the hollow probe be moved away from stations involved in the substance evaluating processes. Having a remote wash station located outside and/or away from the fluidic evaluating stations may require that certain motions of the probe be decoupled from each other or have additional degrees-of-freedom.

Instruments known as UniCel^{®} Dxl 600 Access^{®} Immunoassay System (i.e., Dxl 600) and UniCel^{®} Dxl 800 Access^{®} Immunoassay System (i.e., Dxl 800), manufactured by Beckman Coulter, Inc. of Brea, California, USA, include a duck bill valve to accommodate washing various hollow probes without moving the hollow probes to a remote wash station. Instead, the duck bill valve allows the hollow probe to go through the wash station and thereby reach a container in which the fluidic substance is being evaluated. To wash the hollow probe, the hollow probe is positioned above the duck bill valve and vacuum is applied in an area above the duck bill valve while fluid is flushed through the hollow probe. However, the duck bill valve may leak (i.e., introduce contamination) and requires maintenance. It is recommended that the DxI 600 and DxI 800 users replace the duck bill valve every 5,000 tests as a preventative maintenance measure. Furthermore, as cleaning processes that use such a duck bill valve include applying vacuum above the duck bill valve, positive pressure above the duck bill valve is not possible, and the cleaning processes are therefore constrained from applying positive pressure above the duck bill valve.

Thus, there is a need for a probe washing arrangement and method of use of such an arrangement that overcomes these limitations of the prior art probe washing approaches. The needed improvements include, but are not limited to, reducing carryover, decreasing probe washing time, decreasing maintenance, and increasing available process parameters that may be employed in probe washing.

Patent document US 2004/0194562 A1 discloses an automated clinical analyzer comprising a probe washing arrangement according to the prior art.

### SUMMARY

The scope of the invention is defined by the appended claims.

According to certain aspects of the present disclosure, a probe washing arrangement includes a hollow probe, a probe actuator, a probe washer, and a probe washer actuator. The hollow probe includes a tip. The probe actuator moves the hollow probe vertically along a probe path. The probe washer cleans the hollow probe, includes a cavity that is adapted to receive at least a portion of the hollow probe when the probe washer is positioned at a deployed position, intersects the probe path when the probe washer is positioned at the deployed position, and clears the probe path when the probe washer is positioned at a stowed position. The probe washer actuator moves the probe washer between the deployed position and the stowed position.

According to certain aspects of the present disclosure, a sample analysis system includes a probe washing arrangement including a probe and a probe washer for cleaning the probe. The probe is for aspirating and/or dispensing fluid from/into at least one receptacle. The probe is moveable along a probe path. The probe washer is moveable between at least a first position and a second position. When the probe washer is at the first position. The probe path clears the probe washer and thereby allows the probe to travel past the probe washer to the receptacle. When the probe washer is at the second position, the probe path intersects the probe washer and thereby allows the probe to travel into the probe washer.

According to certain aspects of the present disclosure, a sample analysis system includes at least two stations, a carrier, and a probe washing arrangement for cleaning the probe. The carrier is for transporting at least one sample vessel between the at least two stations. The probe washing arrangement includes a probe is for aspirating and/or dispensing fluid from/into the at least one sample vessel when the at least one sample vessel is at a probe receiving station of the at least two stations. The probe is moveable along a probe path. The probe washing arrangement includes a probe washer that is moveable between at least a first position and a second position. When the probe washer is at the first position. The probe path clears the probe washer and thereby allows the probe to travel past the probe washer to the sample vessel at the probe receiving station. When the probe washer is at the second position, the probe path intersects the probe washer and thereby allows the probe to travel into the probe washer.

According to certain other aspects of the present disclosure, the sample analysis system may further include a cleaning fluid supply for supplying cleaning fluid. The cleaning of the probe may include internal cleaning. The probe washing arrangement may include a drain and may be configured to facilitate the internal cleaning of the probe by draining the cleaning fluid via the drain after the cleaning fluid is passed from the cleaning fluid supply through the probe. The sample analysis system may further facilitate external cleaning of the probe, and the probe washing arrangement may further include an inlet. The inlet and the drain may be configured to facilitate the external cleaning of the probe by applying the cleaning fluid to at least an external portion of the probe and draining the cleaning fluid via the drain after the cleaning fluid is passed from the cleaning fluid supply through the inlet.

According to certain additional aspects of the present disclosure, the carrier of the sample analysis system may include a rotating ring and/or a rotating disk with a plurality of holders for individually transporting a plurality of the sample vessels. One or more of the probe receiving stations may be included in a wash unit. The at least one sample vessel may be a reaction vessel. The probe path may be a linear path. The probe path may be a vertical path. In certain embodiments, the probe may move only along the probe path when the sample analysis system is in normal analyzing operation. In certain embodiments, only one of the at least one sample vessel occupies any station of the at least two stations at a time. In certain embodiments, the probe washer includes a housing that includes the inlet and/or the drain, and the housing may further include a wall that blocks (i.e., intersects) the probe path when the probe washer is at the second position. In certain embodiments, the probe washer is rotationally movable between at least the first position and the second position about an axis. In certain embodiments, the axis is parallel to the probe path. In certain embodiments, the probe washer is movable between at least the first position and the second position with a single degree-of-freedom. In certain embodiments, the external portion of the probe includes a tip portion.

A variety of additional aspects will be set forth in the description that follows. These aspects can relate to individual features and to combinations of features. It is to be understood that both the foregoing general description and the following detailed description are exemplary and explanatory only and are not restrictive of the broad concepts upon which the embodiments disclosed herein are based.

### BRIEF DESCRIPTION OF THE DRAWINGS

Figure 1 is a schematic diagram of an example probe washing arrangement including a hollow probe and a probe washer, according to the principles of the present disclosure;
Figure 2 is a schematic diagram in a first configuration of an example pipetting system with an example probe washing station;
Figure 3 is the schematic diagram of Figure 2, but in a second configuration;
Figure 4 is the schematic diagram of Figure 2, but in a third configuration;
Figure 5 is the schematic diagram of Figure 2, but in a fourth configuration;
Figure 6 is the schematic diagram of Figure 2, but in a fifth configuration;
Figure 7 is a perspective view of an example wash unit, with a schematic component, according to the principles of the present disclosure;
Figure 8 is an elevation view of the wash unit of Figure 7;
Figure 9 is a top plan view of the wash unit of Figure 7;
Figure 10 is another perspective view of a rotary portion of the example wash unit of Figure 7;
Figure 11 is a perspective view of two linear portions of the wash unit of Figure 7, in a first configuration;
Figure 12 is a perspective view of the two linear portions of Figure 11, in a second configuration, with additional schematic components;
Figure 13 is an elevation view of the two linear portions of Figure 11 in a configuration similar to the configuration of Figure 11;
Figure 14 is an elevation view of the two linear portions of Figure 11 in a configuration similar to the configuration of Figure 12;
Figure 15 is a perspective view of a probe washing station of the wash unit of Figure 7, shown in a first configuration, according to the principles of the present disclosure;
Figure 16 is a perspective view of the probe washing station of Figure 15, but in a second configuration, according to the principles of the present disclosure;
Figure 17 is an elevation view of the probe washing station of Figure 15, with additional schematic components, in the second configuration of Figure 16;
Figure 18 is the elevation view of Figure 17, but with the probe washing station in cross-section and a probe washing flow-path schematically illustrated;
Figure 19 is the cross-sectional elevation view of Figure 18, but with the probe washing station in the first configuration of Figure 15;
Figure 20 is a cross-sectional elevation view similar to the cross-sectional elevation view of Figure 19, but with a probe, a reaction vessel, and a carrier further illustrated;
Figure 21 is a cross-sectional elevation view similar to the cross-sectional elevation view of Figure 20, but with the probe partially inserted into the reaction vessel;
Figure 22 is a cross-sectional elevation view similar to the cross-sectional elevation view of Figure 18, but with another probe washing flow-path schematically illustrated and the probe, the reaction vessel, and the carrier of Figure 20 further illustrated; and
Figure 23 is a cross-sectional elevation view similar to the cross-sectional elevation view of Figure 18, but with still another probe washing flow-path schematically illustrated and the probe, the reaction vessel, and the carrier of Figure 20 further illustrated.

### DETAILED DESCRIPTION

Various embodiments will be described in detail with reference to the drawings, wherein like reference numerals represent like parts and assemblies throughout the several views. Reference to various embodiments does not limit the scope of the claims attached hereto. Additionally, any examples set forth in this specification are not intended to be limiting and merely set forth some of the many possible embodiments for the appended claims.

According to the principles of the present disclosure, a probe washing arrangement may clean a probe P in a variety of sample analysis systems. As a variety of sample analysis systems with a variety of configurations are suitable for incorporating a probe washing arrangement for a probe P, the probe washer and/or the probe P may be configured in a variety of configurations suitable for a particular sample analysis system and/or sub-system. Several examples and characteristics of such sample analysis systems are mentioned and described herein. Other sample analysis systems may also be suitable for incorporating the various probe washers and/or probes P mentioned herein, as will be understood by one of ordinary skill in the art.

Instruments which may benefit from using a probe washing arrangement include but are not limited to diagnostic analyzers, such as immunoassay analyzers, clinical chemistry analyzers, hematology analyzers, nucleic acid analyzers, flow cytometry systems, and urinalysis analyzers. Instruments may also include liquid handling systems used for laboratory systems involving biological fluids, such as the Biomek i-Series Automated Workstations from Beckman Coulter, Inc., Brea, CA, USA and similar laboratory automation platforms or multi-well plate handlers.

According to the principles of the present disclosure, various probes P may be used to handle various fluids within a sample analysis system (e.g., a biological testing instrument). The various fluids or components thereof may tend to adhere to the probes P and may be hydrophobic, colloidal, sticky, tacky, viscous, etc. Fluids handled include samples, specimens, reagents, chemicals, agents, rinses, particles, substrates, enzymes, unreacted substances, whole blood, serum, plasma, other blood components or fractions, immune complexes, urine, saliva, cerebral spinal fluid, amniotic fluid, feces, mucus, cell or tissue extracts, nucleic acid extracts, biological fluids, etc. Often fluids handled are biological fluids, assay reagents, or mixtures thereof. Biological fluids, may also be called samples or specimens, and may include blood or blood components or fractions (such as whole blood, serum, plasma, red blood cells, white blood cells, platelets), urine, saliva, cerebral spinal fluid, amniotic fluid, feces, mucus, cell or tissue extracts, nucleic acid extracts. Assay reagents may include: wash buffers, rinses, sample pretreatments, diluents, stains, dyes, substrates, antibody conjugates, enzymes or enzyme conjugates, nucleic acid conjugates, cell lysis reagents, and the like, in reacted or unreacted states. Components of assay reagents typically include: water, buffers, chemicals, particles, substrates, enzymes, fixatives, preservatives, nucleic acids, antibodies, acids, bases, and mixtures thereof, in reacted or unreacted states. Mixtures of Biological Fluids and Assay reagents, may be in reacted or unreacted states, resulting in new combinations such as immune complexes, nucleic acid complexes, enzyme-substrate complexes and the like. Biological fluids, assay reagents, or mixtures thereof as well as sub-sets of components thereof, reacted or unreacted, may be aspirated, delivered, retained or removed via methods utilizing the probe washing arrangement consistent with the present application.

Such repeated pipetting of the various fluids with the probes P may result in a portion of an early sample adhering to the probe P and then being introduced to a subsequent sample by the probe P and thereby result in the contamination of the subsequent sample. Similar carryover is possible with assay reagents. Probe washing assemblies may be used to clean the probes P of sample analysis systems for various reasons, including avoiding such contamination, cross-contamination, carryover, etc. In certain embodiments, the probe washing arrangement may be arranged and/or implemented to minimize or eliminate time lost to cleaning the probe P. In certain embodiments, the probe washing arrangement may be arranged to minimize space lost to the probe washer.

The probe washing arrangement by cleaning the probes P with the probe washer, sample to sample carryover can be reduced to an acceptable level or eliminated, and the biological testing instrument may thereby meet various carryover protocols. Under certain conditions, not cleaning the probes P leads to sample to sample carryover and thereby leads to analytical laboratory error.

The probes P may aspirate and/or dispense the various fluids from and/or to various probe receiving stations PS within and/or adjacent to the sample analysis system. The probe receiving stations PS may be fixed or may be moveable.

One or more receptacles (e.g., vessels) may be positioned at some or all of the probe receiving stations PS. The probes P may dispense and/or aspirate various fluids into and/or from the one or more receptacles. The one or more receptacles may include tubes, sample tubes, wells, capped tubes, uncapped tubes, microtainers, cuvettes, Microtiter^{™} wells, flow cells, inlets fluidically connected to flowcells, etc. Each of the one or more receptacles may be positioned at a single probe receiving station PS or may be moveable between probe receiving stations PS and/or other positions that are not probe receiving.

Certain probes P may be specialized in dispensing fluids and may therefore only dispense fluids and not aspirate fluids. Likewise, certain probes P may be specialized in aspirating fluids and may therefore only aspirate fluids and not dispense fluids. Still other probes P may both aspirate and dispense fluids, as desired. To include probes P that may dispense only, aspirate only, and both dispense and aspirate, the conjunction "and/or" is used herein. Thus, mentioning a probe P for aspirating and/or dispensing fluid includes dispense only probes P, aspirate only probes P, and dispense and aspirate probes P.

Probes P may be actuated in a variety of ways suited to their particular functions in a particular sample analysis system. Certain probes P may be actuated along a single degree-of-freedom. The single degree-of-freedom may be a linear degree-of-freedom parallel to an axis of the probe P. Other probes P may be actuated along multiple degrees-of-freedom. Certain probes P may service a single location, while other probes P may service multiple locations. According to the invention, the hollow probe and the probe path are continuously aligned with the probe receiving station. Certain probes P may receive fluid from a source (e.g., from a tank via a tube) and deliver (i.e., dispense) the fluid to one or more locations, while other probes P may remove (i.e., aspirate) the fluid from one or more locations and deliver fluid to a sink (e.g., to a tank via a tube). Still other probes P may aspirate one or more fluids from one or more locations and dispense one or more fluids to one or more locations and may thereby transfer one or more fluids between several locations. Various pumps, plumbing, valves, and conduits may be used to connect the probes P.

The locations serviced by the probes P may also vary according to their particular functions in a particular sample analysis system. For example, a probe P may aspirate and/or dispense fluid from and/or to various vessels, drains, supply reservoirs, waste collection reservoirs, tubes, sample tubes, wells, capped tubes, uncapped tubes, microtainers, cuvettes, Microtiter^{™} wells, etc. In certain embodiments, a probe P may receive and/or deliver fluids to a component that processes the fluid, such as a flow cell. The flow cell may include an aperture and various instrumentation to measure various aspects of the fluid. The term "receptacle", as used herein, refers to various interfacing features serviced (dispensed to and/or aspirated from) by the probe P, including receptacles included with the examples herein.

Various configurations of probe washing arrangements may be suited for various configurations of probes P, including the examples herein, and various applications in which the probes P and the probe washers are employed. In certain embodiments, both the probe P and the probe washer move relative to the sample analysis system (e.g., a frame of the sample analysis system). In certain embodiments, the receptacle does not move relative to the sample analysis system, at least when the receptacle is being aspirated from and/or dispensed into or when the sample analysis system is in operation. In other embodiments, the receptacle moves or is moved to align with the probe in preparation for aspiration and/or dispensing and may further move to align with another probe for further aspiration and/or dispensing.

In example embodiments not covered by the claims where the probes P move to multiple positions (e.g., probe receiving stations) about the sample analysis systems, the probe washer may travel with the probe P. In particular, an actuator, gantry, robot, or other mechanism that moves the probe P to the various positions may also move the probe washer. This combined movement allows the probe P to be washed by the probe washer while the probe P is moving or being moved. This combined movement may save cycle time as the probe moving operation and the probe washing operation may be performed simultaneously.

In certain embodiments of probe washing arrangements, probe P and the probe washer may be co-located (e.g., positioned adjacent to each other). Co-locating the probe P and the probe washer may accommodate their combined movement. Co-locating the probe P and the probe washer may save space on the sample analysis system. The combination of the probe P and the probe washer may form a self-washing probe arrangement. In certain embodiments, the probe washer may be arranged to minimize space lost to the probe washer. In certain embodiments, analyzer / assay performance time lost to cleaning the probe P is minimized or eliminated.

In certain embodiments, the probe washer is actuated by the probe washer actuator about a single degree-of-freedom (e.g., parallel to a linear displacement or a rotational displacement) and thereby moves the probe washer relative to the probe path about the single degree-of-freedom. In certain embodiments, the probe washer may be actuated from a stowed position to a washing position by an actuator. In certain embodiments, the actuation includes only a single degree-of-freedom. In certain embodiments, the probe washer may be actuated relative to the sample analysis system (e.g., a frame of the sample analysis system). In other embodiments, the probe washer may be actuated relative to a carrier (e.g., an actuator, a gantry, a robot, etc.) that moves the probe P and the probe washer. In still other embodiments, the probe washer may be actuated relative to another moveable component of the sample analysis system (e.g., a probe platform of the sample analysis system).

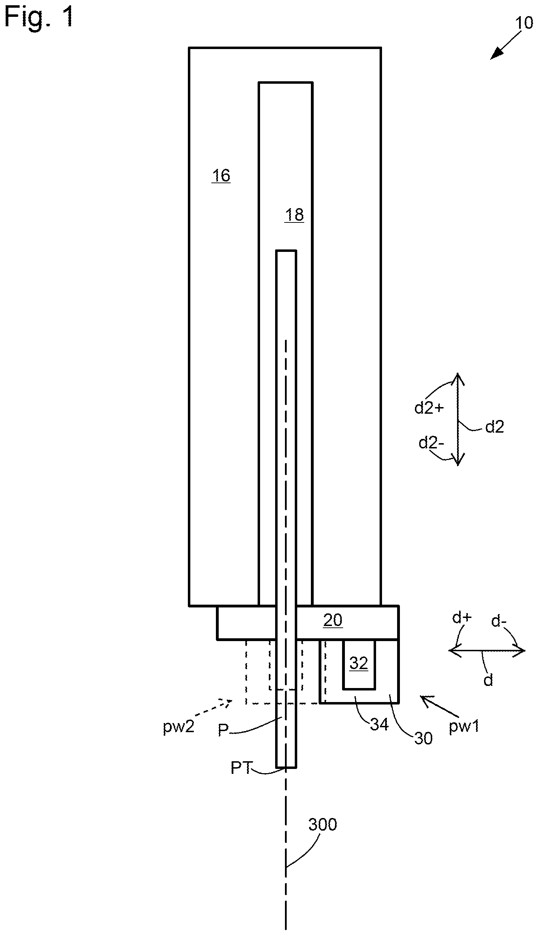

Turning now to Figure 1, an example probe washing arrangement 10 is illustrated, according to the principles of the present disclosure. The probe washing arrangement 10 includes a hollow probe P, a frame 16, a probe actuator 18, a probe washer 30, and a probe washer actuator 20. The probe actuator 18 actuates the hollow probe P relative to the frame 16. The hollow probe P includes a tip PT. The probe actuator 18 moves the hollow probe P vertically along a probe path 300. The probe washer 30 cleans the hollow probe P, includes a cavity 32 that is adapted to receive at least a portion of the hollow probe P when the probe washer 30 is positioned at a deployed position pw2, intersects the probe path 300 when the probe washer 30 is positioned at the deployed position pw2 (shown in dashed line), and clears the probe path 300 when the probe washer 30 is positioned at a stowed position pw1. The probe washer actuator 20 moves the probe washer 30 between the deployed position pw2 and the stowed position pw1. The probe washer actuator 20 actuates the probe washer 30 relative to the frame 16.

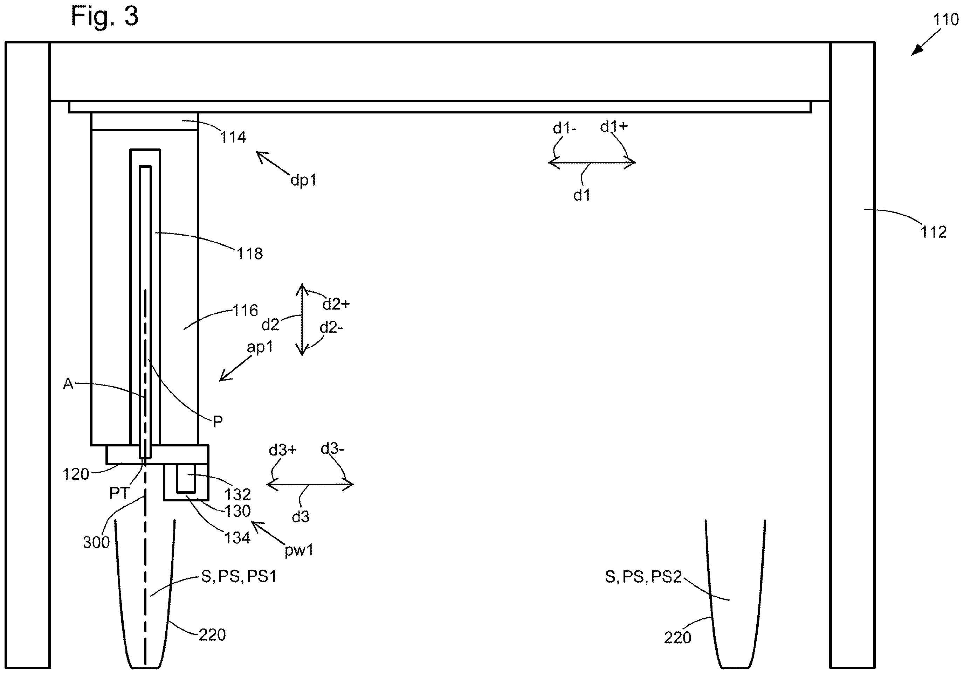

In certain embodiments, the probe actuator 20 is adapted to move the hollow probe P between a stowed probe position ap1, AP1 and a probe washing position ap2, AP2 similar to or the same as that shown at Figures 3-5, 11, 13, 22, and 23. The probe washer 30 is moveable between at least the stowed position pw1 and the deployed position pw2 at least when the hollow probe P is at the stowed probe position ap1, AP1. In certain embodiments, the probe washer 30 is not moveable between the stowed position pw1 and the deployed position pw2 when the hollow probe P is at the probe washing position ap2, AP2 (e.g., because of interference with the hollow probe P).

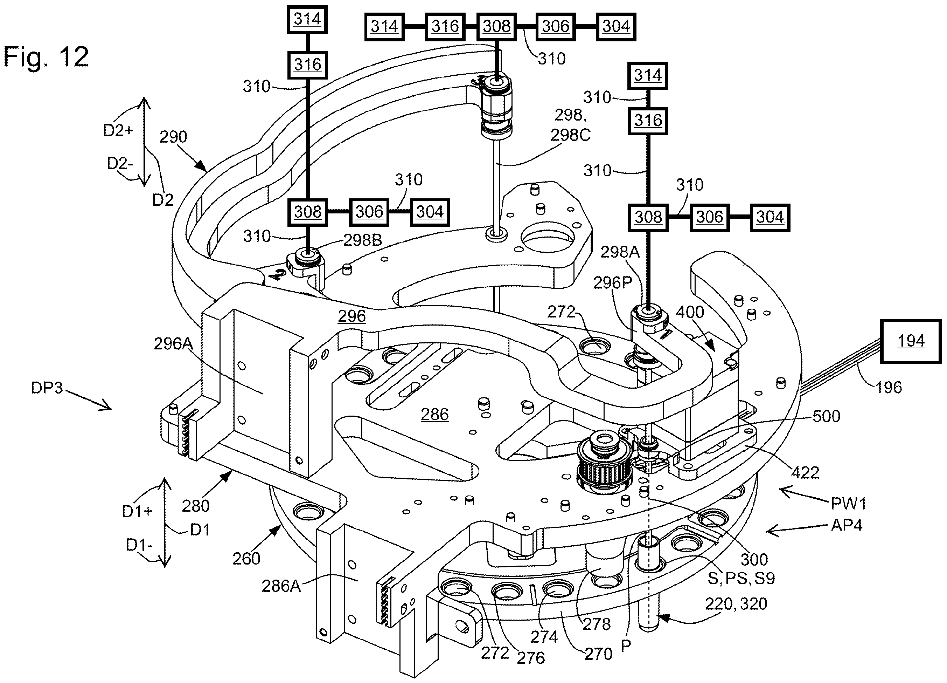

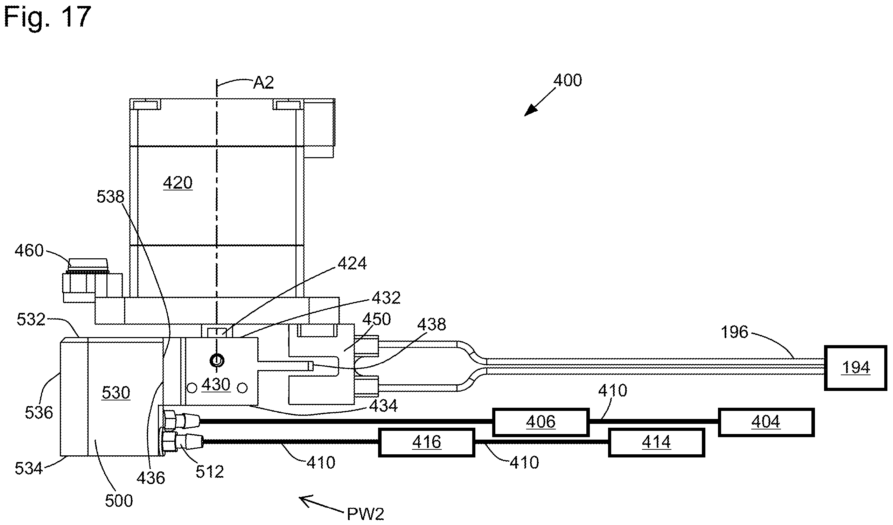

In certain embodiments, the probe washing arrangement 10 may include a cleaning fluid supply 304, 404 for supplying cleaning fluid 302, 402 similar to or the same as that shown at Figures 12 and 17, as described in detail hereinafter. In certain embodiments, the probe washing arrangement 10 may include at least one pump 306, 316, 406, 416 for transferring the cleaning fluid 302, 402 into and/or out of the probe washer 30 similar to or the same as that shown at Figures 12 and 17, as described in detail hereinafter. In certain embodiments, the probe washing arrangement 10 may include at least one valve 308 for configuring fluid flow through the probe washer 30 similar to or the same as that shown at Figure 12, as described in detail hereinafter.

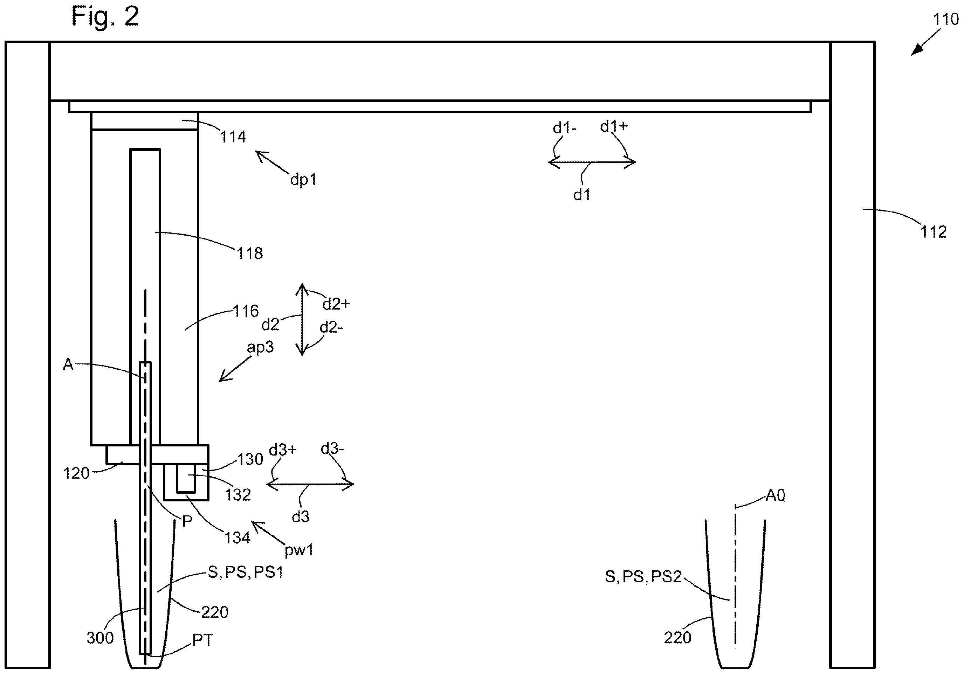

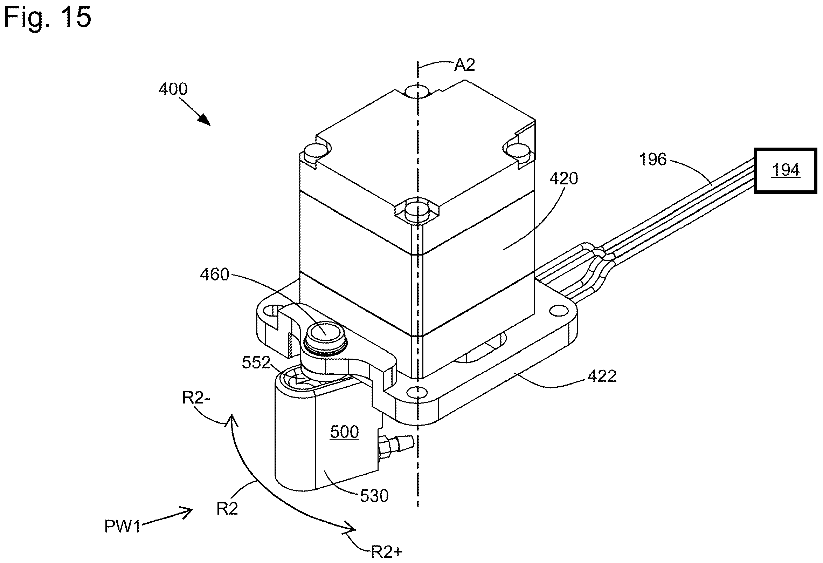

In certain embodiments, the probe washer 30 includes a housing similar to or the same as the housing 530 shown at Figures 15-23, as described in detail hereinafter. The housing of the probe washer 30 may include a wall 34. The wall 34 may be similar to or the same as the walls 134, 550 shown at Figures 2-6, 18, 22, and 23, as described in detail hereinafter.

In certain embodiments, the probe washer 30 is actuated by the probe washer actuator 20 about a single degree-of-freedom (e.g., parallel to a linear displacement d, illustrated at Figure 1, or a rotational displacement R2, illustrated at Figure 15) and thereby moves the probe washer 30 relative to the probe path 300 about the single degree-of-freedom.

In certain embodiments, the hollow probe P only moves vertically along the probe path 300 (e.g., see Figure 1). In other embodiments, the hollow probe P moves along the probe path 300 vertically and moves in other directions (e.g., see Figures 2-6).

Turning now to Figures 2-6, an example pipetting system 110 not covered by the claims is illustrated. The pipetting system 110 may be used to dispense and/or aspirate fluids between, from, and/or to individual or multiple probe receiving stations PS via a probe P. Example probe receiving stations PS are illustrated at Figures 1, 6, and 10. The example pipetting system 110 may repeatedly dispense and/or aspirate fluids with a probe P to a single probe receiving station PS. In other embodiments, the example pipetting system 110 may repeatedly dispense and/or aspirate fluids with a probe P to a plurality of probe receiving station PS. The pipetting system 110 may be used to transfer fluids between multiple probe receiving stations PS (e.g., between probe receiving stations PS1 and PS2) with a probe P.

In the embodiment illustrated at Figures 2-6, the example pipetting system 110 is configured to transfer fluids between a first probe receiving station PS1 and a second probe receiving station PS2. Other embodiments may include a single probe receiving station PS or more than two probe receiving stations PS. As depicted, each of the probe receiving stations PS1, PS2 has a vessel 220 positioned thereat. Various carriers (conveyors, pick-and-place devices, robots, etc.) may be used to transfer various vessels 220 to and/or from the probe receiving stations PS1, PS2. In the depicted embodiment, a single vessel 220 is at each of the probe receiving stations PS1, PS2. In other embodiments, multiple vessels 220 may be at the probe receiving stations PS1 and/or PS2.

In the embodiment illustrated at Figures 2-6, the example pipetting system 110 includes a first frame 112. The first frame 112 may be mounted to the frame 108 of the instrument 100. In the depicted embodiment, the frame 112 is C-shaped and provides top-mounted support. In other embodiments, the frame 108 may have other configurations (e.g., cantilevered, provide side-mounted support, provide bottom-mounted support, etc.).

A first actuator 114 may be mounted to the first frame 112. As depicted, the first actuator 114 is a linear actuator. In other embodiments, the first actuator 114 may be non-linear (e.g., rotary). As depicted, the first actuator 114 provides a single degree-of-freedom. The first actuator 114 may be powered by a variety of means (e.g., rotary motor, linear motor, stepper motor, pneumatic cylinder, etc.). As depicted, the first actuator 114 provides movement along displacement d1. A sign convention has been defined with respect to the displacement d1. In particular, a first direction d1+ and an opposite second direction d1- have been defined for displacement d1.

In the embodiment illustrated at Figures 2-6, the example pipetting system 110 includes a second frame 116. The second frame 116 may be mounted to the first actuator 114. In the depicted embodiment, the frame 116 is cantilevered and provides side-mounted support. In other embodiments, the frame 116 may have other configurations (e.g., C-shaped, provide top-mounted support, provide bottom-mounted support, etc.).

A second actuator 118 may be mounted to the second frame 116. As depicted, the second actuator 118 is a linear actuator. In other embodiments, the second actuator 118 may be non-linear (e.g., rotary). As depicted, the second actuator 118 provides a single degree-of-freedom. The second actuator 118 may be powered by a variety of means, as mentioned above in regard to the first actuator 114. As depicted, the second actuator 118 provides movement along displacement d2. A sign convention has been defined with respect to the displacement d2. In particular, a first direction d2+ and an opposite second direction d2- have been defined for displacement d2. As depicted, the displacements d1 and d2 are perpendicular. In other embodiments, the displacements d1 and d2 may be non-perpendicular (e.g., skew, parallel, etc.).

As depicted, a probe P, including a probe tip PT, is mounted to the second actuator 118. In the depicted embodiment, a single probe P is mounted to the second actuator 118. In other embodiments, multiple probes P may be mounted to the second actuator 118. By actuating the first and second actuators 114 and 118, the probe P and the probe tip PT can be moved to a plurality of locations within a two-dimensional space including the probe receiving stations PS1 and PS2. In other embodiments, an additional frame and/or an additional actuator may be provided (e.g., between the first frame 112 and the frame 108 of the instrument 100) thereby allowing the probe P and the probe tip PT to be moved to a plurality of locations within a three-dimensional space.

The probe P may define an axis A. The probe receiving station PS may define an axis A0. The probe P may be aligned with the corresponding probe receiving station PS when the axes A and A0 are aligned within an acceptable tolerance.

In typical use, the first actuator 114 axially aligns the probe P with the desired probe receiving station PS, PS1 and thereby aligns the axes A and A0. As illustrated at Figures 2 and 3, the probe P and the probe receiving station PS1 of the example pipetting system 110 are aligned when the first actuator 114 is at an actuated position dp1. Upon alignment between the probe P and the probe receiving station PS, PS1 (e.g., as shown at Figure 3), the second actuator 118 may move the probe P along its axis A and thereby along a probe path 300 (e.g., away from an actuated position ap1 of the second actuator 118). Continued movement along the probe path 300 advances the probe tip PT toward an opening of the vessel 220. Further movement along the probe path 300 may advance the probe tip PT through the opening of the vessel 220 and into an interior of the vessel 220 (e.g., to an actuated position ap3 of the second actuator 118 shown at Figure 2). Upon the probe P dispensing and/or aspirating fluid into the vessel 220 at the actuated position(s) ap3 (e.g., including one or more operating positions), the probe P may retract along the probe path 300 (e.g., back to the actuated position ap1 shown at Figure 3). The first actuator 114 may then move the second frame 116 and thereby move the probe P, the probe tip PT, the probe path 300, a probe washer 130, and a third actuator 120 (e.g., to actuated positions dp2, dp3, dp4, to another probe receiving station PS, PS2, etc.).

As the probe P may become contaminated with the various fluids that it aspirates and/or dispenses, the probe washer 130 is provided to clean the probe P. The probe washer 130 may include various features of a probe washer 500, described and illustrated herein. The probe washer 130 may further interact with various elements that the probe washer 500 interacts with, including the probe P itself, as described and illustrated herein. The probe washer 130 is actuated by the third actuator 120, described in detail below.

In the depicted embodiment illustrated at Figures 2-6, the third actuator 120 may be mounted to the second frame 116. As depicted, the third actuator 120 is a linear actuator. In other embodiments, the third actuator 120 may be non-linear (e.g., rotary). As depicted, the third actuator 120 provides a single degree-of-freedom. The third actuator 120 may be powered by a variety of means, as mentioned above in regard to the first actuator 114. As depicted, the third actuator 120 provides movement along displacement d3. A sign convention has been defined with respect to the displacement d3. In particular, a first direction d3+ and an opposite second direction d3- have been defined for displacement d3. As depicted, the displacements d2 and d3 are perpendicular. In other embodiments, the displacements d2 and d3 may be non-perpendicular (e.g., skew, etc.). As depicted, the displacements d1 and d3 are parallel. In other embodiments, the displacements d1 and d3 may be non-parallel (e.g., perpendicular, skew, etc.).

As mentioned above, the probe washer 130 may clean the probe P similar to or the same as the probe washer 500 cleans the probe P, as described and illustrated herein. As depicted at Figures 3-5, the probe washer 130 is moved relative to the probe path 300 by the third actuator 120 (e.g., to an actuated position pw2) such that the probe washer 130 (e.g., a cleaning cavity 132 of the probe washer 130 and/or a wall 134 at a bottom of the cleaning cavity 132) intersects the probe path 300 when cleaning or preparing to clean the probe P and thereby allows the probe P to pass into and out of the cleaning cavity 132 of the probe washer 130. The actuated position pw2 may thereby be an engaging position of the probe washer 130. In addition, the probe washer 130 is moved relative to the probe path 300 by the third actuator 120 (e.g., to an actuated position pw1) such that the probe washer 130 clears the probe path 300 when the probe P dispenses, aspirates, prepares for dispensing, and/or prepares for aspirating and thereby allows the probe P to pass by the probe washer 130. The actuated position pw1 may thereby be a non-engaging position (i.e., a stowed position) of the probe washer 130.

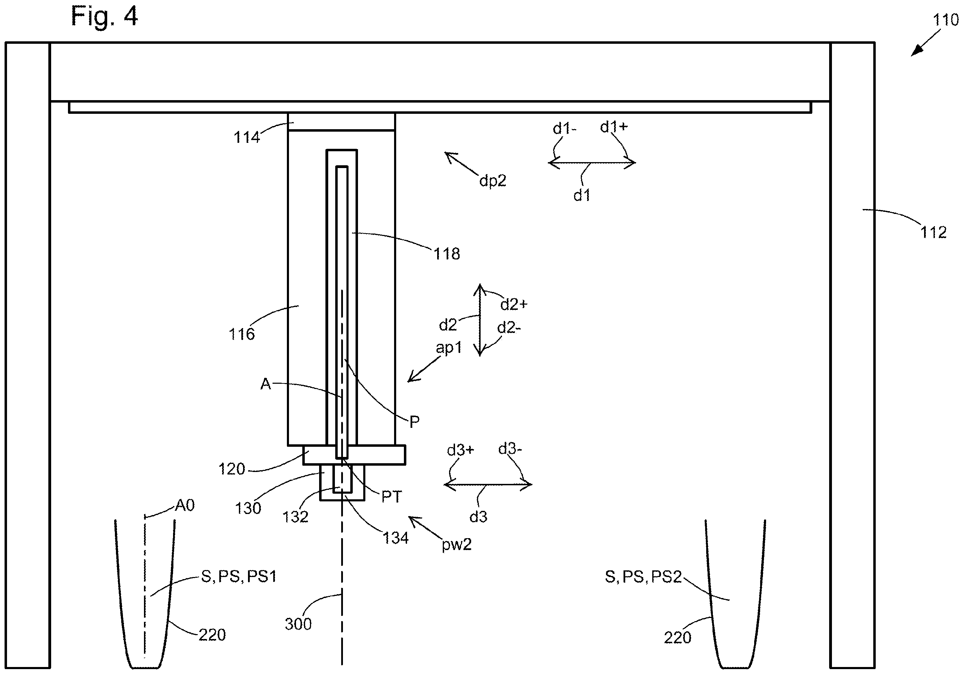

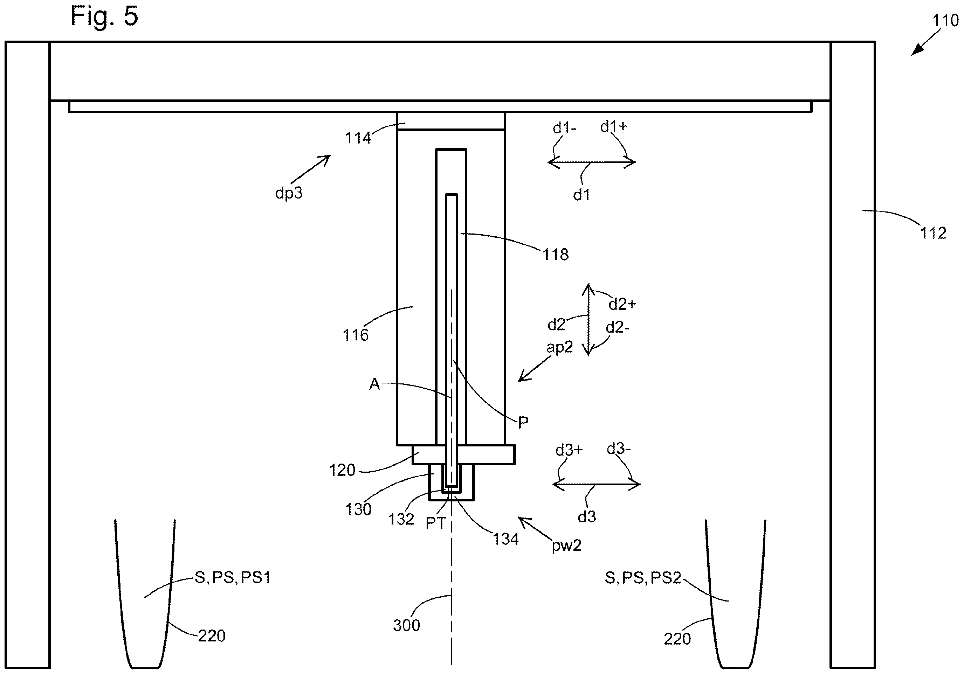

The cleaning cavity 132 of the probe washer 130 may include a revolved boundary that is axisymmetric about a cavity axis. The probe P is typically aligned with the cleaning cavity 132 when the axis A and the cavity axis are aligned within an acceptable tolerance. As shown at Figures 4 and 5, the axis A and the cavity axis are aligned when the actuator 120 is at the actuated position pw2.

Upon the axis A and the cavity axis being aligned, the second actuator 118 may advance the probe P from the actuated position ap1 to the actuated position ap2 (e.g., a washing position) and thereby position at least a portion of the probe P within the cleaning cavity 132 of the probe washer 130. Upon the probe P or a portion thereof entering the cleaning cavity, the probe P may be internally and/or externally cleaned. Additional details of probe cleaning are given below with the description of the probe washer 500.

Upon the probe P being cleaned, the second actuator 118 may retract the probe P from the actuated position ap2 to the actuated position ap1 (e.g., a stowed position) and thereby remove the probe P or portion thereof from the cleaning cavity 132 of the probe washer 130.

As illustrate at Figures 3-5, the actuation of the probe washer 130 and/or the actuation of the probe P into and/or out of the probe washer 130 may be done onthe-fly. In particular, the first actuator 114 may move the second frame 116 and thereby move the probe P, the probe tip PT, the second actuator 118, the probe path 300, the probe washer 130, and/or the third actuator 120 (e.g., to actuated positions dp1, dp2, dp3, dp4, to probe receiving station PS, PS1, PS2, etc.) simultaneously with the cleaning of the probe P by the probe washer 130. Cycle time of the pipetting system 110 may be saved due to this simultaneous movement between probe receiving station PS, PS1, PS2 and the cleaning of the probe P.

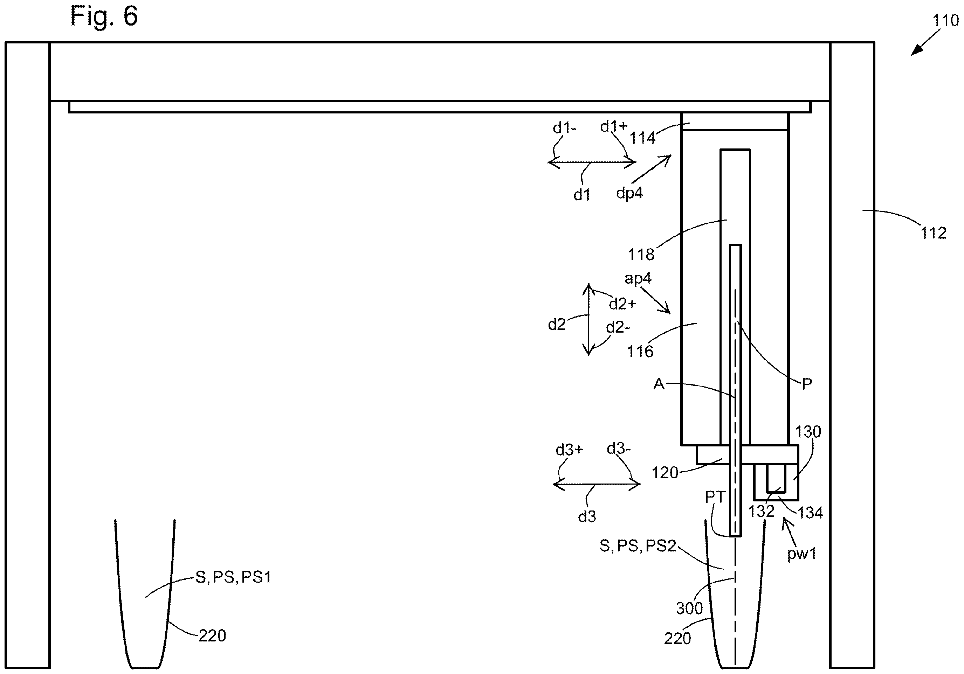

As illustrated at Figure 6, the first actuator 114 may axially align the probe P with another desired probe receiving station PS, PS2 and thereby align the axes A and A0, respectively. Upon alignment between the probe P and the probe receiving station PS, PS2, the second actuator 118 may move the probe P along its axis A and thereby along the probe path 300 (e.g., away from the actuated position ap1 of the second actuator 118). Continued movement along the probe path 300 advances the probe tip PT toward an opening of the vessel 220. Further movement along the probe path 300 may advance the probe tip PT through the opening of the vessel 220 and into an interior of the vessel 220 (e.g., to an actuated position ap4 of the second actuator 118 shown at Figure 6). Upon the probe P dispensing and/or aspirating fluid into the vessel 220 at the actuated position(s) ap4 (e.g., including one or more operating positions), the probe P may retract along the probe path 300 (e.g., back to the actuated position ap1 shown at Figure 3). The first actuator 114 may then again move the second frame 116 and thereby move the probe P, the probe tip PT, the probe path 300, the probe washer 130, and the third actuator 120 (e.g., to actuated positions dp1, dp2, dp3, to another probe receiving station PS, PS1, etc.).

An example method for immunological analysis using the example probe P and probe washer 30, 130, 500 will now be described in detail. A vessel 220 (e.g., a reaction vessel, a container, etc.) may be transported to a predetermined position S (e.g., a station), and a first reagent including magnetic particles is dispensed into the vessel 220 by a probe P. The probe P may be washed with the probe washer 30, 130, 500 before and/or after the dispensing. In certain embodiments, the vessel 220 is a reaction vessel. For purposes of this disclosure, the term "fluid" includes fluids with particles (e.g., suspended particles) such as the first reagent with magnetic particles.

A sample or specimen (e.g., a fluid, a sample or specimen suspended or mixed in a fluid, etc.) is dispensed into the vessel 220 by a probe P. The probe P may be washed with the probe washer 30, 130, 500 before and/or after the dispensing. In certain embodiments, the sample pipetting device, aspirates, with a probe P, the sample from a sample vessel that has been transported to a predetermined position S. The probe P may be washed with the probe washer 30,130, 500 before and/or after the aspirating. Once the sample is dispensed into the vessel 220, the vessel 220 may be subjected to mixing and/or incubating, if required, so as to produce magnetic particle carriers each formed of the antigen and the magnetic particle in the sample bonded together.

The vessel 220 may be subjected to a first cleaning process in which the magnetic particle carriers are magnetically collected by a magnetic collecting unit. A bound-free separation is carried out by a bound-free cleaning dispense nozzle (i.e., a probe P) dispensing a rinsing fluid and by a bound-free cleaning aspiration nozzle (i.e., a probe P) aspirating the uncollected fluid. The probes P may be washed with one or more of the probe washers 30, 130, 500 before and/or after the dispensing and/or aspirating. The bound-free separation may include a series of dispensing the rinsing fluid and aspirating uncollected fluid, with either being first and/or last. As a result, an unreacted substance or substances (e.g., unbound reactants, particles, and/or fluid, etc.) in the vessel 220 is removed (e.g., rinsed away) by the bound-free cleaning aspiration nozzle.

A second reagent, such as a labeling reagent including a labeled antibody and/or a fluid, may be dispensed into the vessel 220 by a probe P. The probe P may be washed with the probe washer 30, 130, 500 before and/or after the dispensing. As a result, immune complexes, each formed of the magnetic particle carrier and the labeled antibody bonded together, are produced.

A second bound-free cleaning process is performed to magnetically collect the magnetic particle carriers by a magnetic collecting structure. Further, a bound-free separation, similar to or the same as that mentioned above, is performed by a bound-free cleaning dispense nozzle (i.e., a probe P) dispensing a rinsing fluid and by a bound-free cleaning aspiration nozzle (i.e., a probe P) aspirating the uncollected fluid. The probes P may be washed with one or more of the probe washers 30, 130, 500 before and/or after the dispensing and/or aspirating. As a result, the labeled antibody that is not bonded with the carrier of the magnetic particles is removed from the vessel 220 by the bound-free cleaning aspiration nozzle 248.

A substrate including an enzyme and/or a fluid is dispensed into the vessel 220 by a substrate nozzle (i.e., a probe P), for example at station S26 of wash unit 176, describe in detail herein. The probe P may be washed with the probe washer 30, 130, 500 before and/or after the dispensing. The contents of the vessel 220 are then mixed. After a certain reaction time necessary for the enzyme reaction passes (e.g., in an incubator), the vessel 220 is transported to a photometric system, such as to a station of a light measurement device.

The enzyme and the immune complex are bonded together through the substrate reactions with the enzyme on the labeled antibody, and light is emitted from the immune complex and measured by a photometric system, such as the light measurement device. The light measurement device operates to calculate an amount of antigen, which is included in the specimen, according to the quantity of light measured.

As the above method uses probes P to aspirate and/or dispense the various fluids from and/or to the various stations S at which the vessel 220 is located, the above method may further incorporate the probe washing arrangement, according to the principles of the present disclosure.

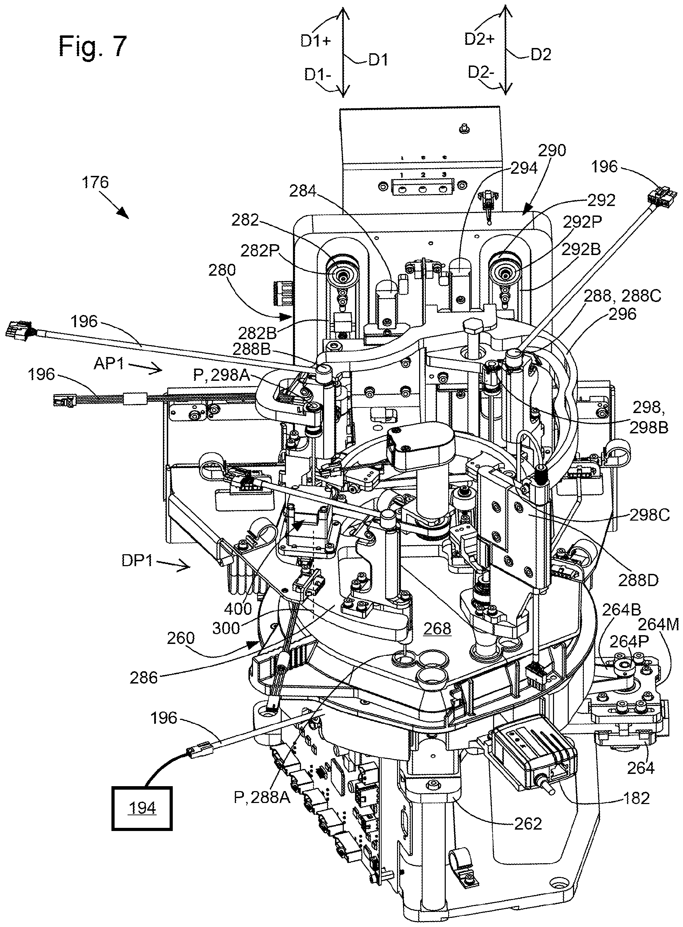

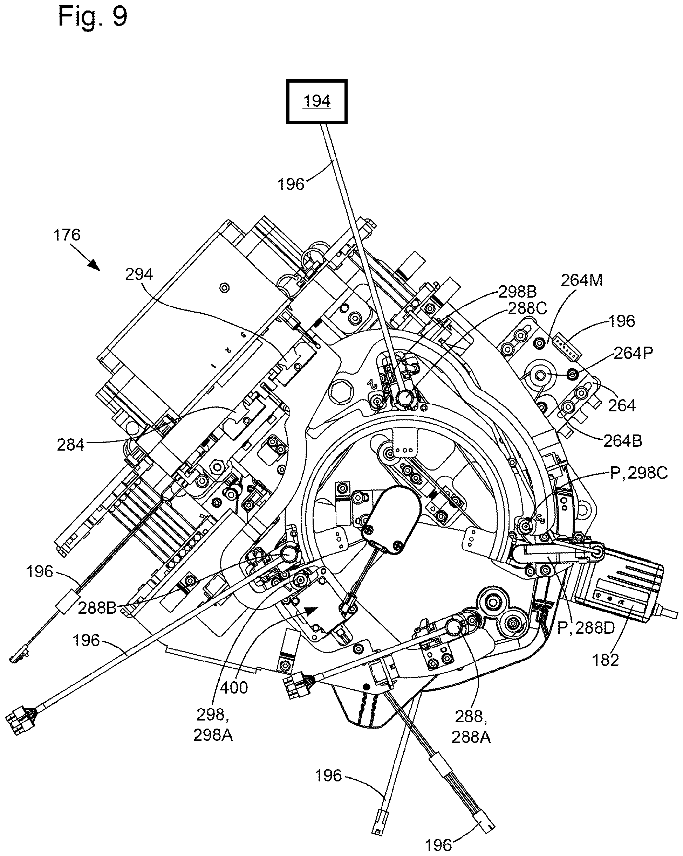

Turning now to Figures 7-9, the probe washer will be further described and illustrated in the context of the wash unit 176, according to the principles of the present disclosure. The probe washer, including various features and methods described hereinafter, may also be applied to other probe applications including those described above, according to the principles of the present disclosure.

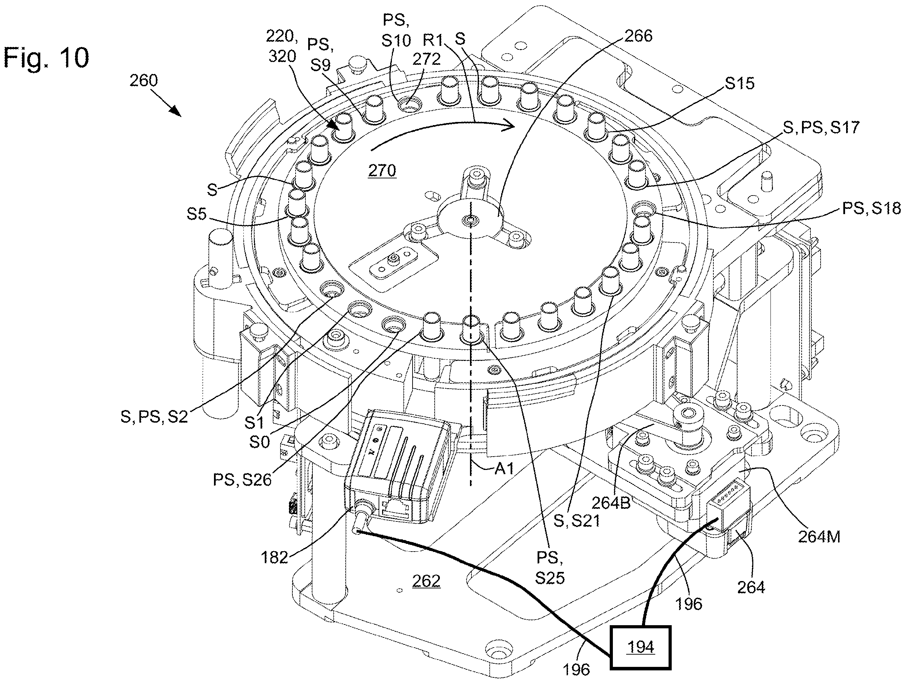

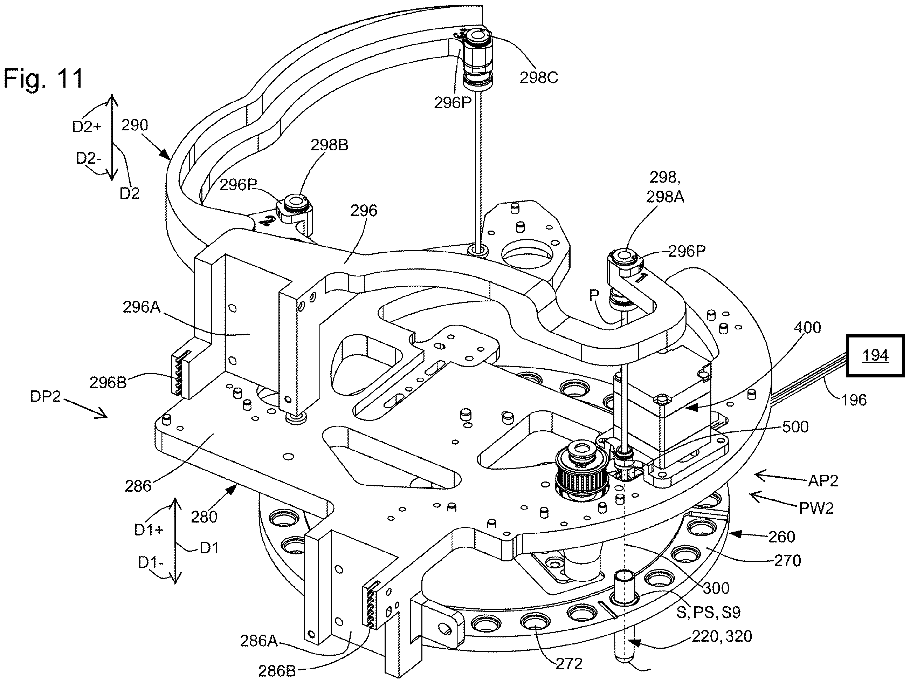

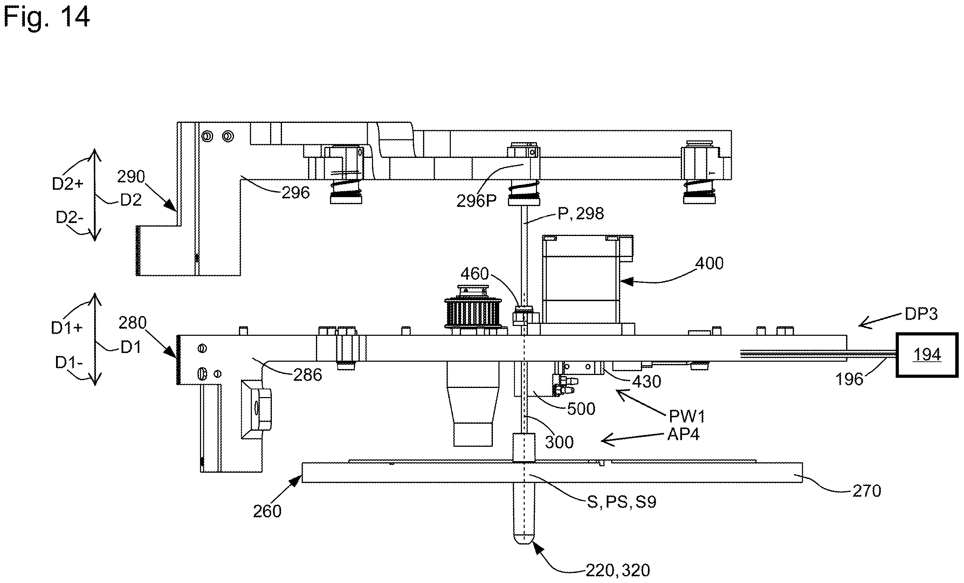

The wash unit 176 includes a carrier arrangement 260, further illustrated at Figure 10, a first probe arrangement 280, and a second probe arrangement 290. The first probe arrangement 280 and the second probe arrangement 290 are further illustrated at Figures 11-14. The wash unit 176 is configured to process biological samples. The wash unit 176 may be further configured to carry out additional operations.

As depicted, the first probe arrangement 280 and the second probe arrangement 290 together form another example pipetting system, according to the principles of the present disclosure. The pipetting system of probe arrangements 280 and 290 are tailored to the configuration of the wash unit 176 and interface with the carrier arrangement 260 of the wash unit 176.

Turning again to Figure 10, the carrier arrangement 260 of the wash unit 176 will now be described in detail. The carrier arrangement 260 includes a carrier 270 (e.g., a carrier wheel, a carrier disk, a carrier ring, etc.). The carrier 270 includes a plurality of holders 272 (e.g., holes, etc.). As depicted, the carrier 270 includes 27 holders 272. In other embodiments, the carrier 270 may include less than or more than 27 holders 272. As illustrated at Figure 12, each of the holders 272 includes a throughhole 274, and a counter-bore 276. The holders 272 are each configured to receive an example vessel 320 (i.e., a sample vessel, a reaction vessel, etc.). In the example embodiment, the holder 272 and the example vessel 320 are each axisymmetric and are axisymmetric with each other, when mated. The vessel 320 may include a revolved form that is axisymmetric about the axis A0 (see Figures 2 and 4). The probe receiving station PS may hold the vessel 320 at a predetermined location and thereby hold the axis A0 of the vessel 320 at a predetermined position. The probe P may include a revolved form that is axisymmetric about the axis A.

In the example depicted, the wash unit 176 defines 27 stations S about which the carrier 270 moves the holders 272 between. In particular, the carrier 272 rotates about an axis A1 and thereby moves the holders 272 from station S to station S about a rotational displacement R1. In the example embodiment, the carrier 270 is indexed 13 1/3 degrees per cycle and thereby advances each of the 27 holders 272 one station forward per cycle. In the depicted embodiment, the carrier 270 is rotary. In other embodiments, other carriers may be non-rotary. In the example embodiment, the carrier 270 includes a single holder 272 at each station at one time. In other embodiments, other carriers may include multiple holders per station at the same time.

At Figure 10, the stations S are labeled with respect to the carrier 270 at a given position. The stations S remain at the positions indicated as the carrier 270 is indexed. The stations S are thus fixed to a frame 262 of the carrier arrangement 260 as the carrier 270 indexes. At Figure 10, the stations S are designated a station number given by "S" followed by the station number. Not all stations S are labeled, but can be determined by counting between the labeled stations S.

A description of the various stations S will now be given. Station S0 is a no-function station, but may transfer the vessel 320 between neighboring stations S. Station S1 is an entrance/exit station. The vessel 320 is introduced to one of the holders 272 of the carrier 270 at station S1. From station S1, the vessel 320 is indexed around to the other stations S and eventually returns to the station S1 where it is removed from the holder 272 of the carrier 270.

As illustrated at Figure 10, the reaction vessel transfer unit 174 may remove and replace a vessel 320 at the station S1 every cycle. Certain cycles may not transfer a vessel 320 into one of the holders 272 that is currently at the station S1, thereby leaving an unfilled holder 272. Figure 10 illustrates such unfilled holders 272 at stations S0, S1, S2, S10, and S18. The empty holders 272 also advance from station S to station S as the carrier 270 advances.

At station S2, the vessel 320, if present, receives fluid from a probe P of a probe assembly 288A (see Figures 7-9). The probe assembly 288A may be a quantity sufficient probe assembly and thereby dispense fluid to bring the fluid level in the vessel 320 up to a predetermined level, even though existing fluid in the vessel may vary. In the example embodiment, stations S3-S8 are magnetic stations. Station S9 receives a probe assembly 298A, and a probe P thereof aspirates fluid from within the vessel 320. The station S9 is also a magnetic station, like the stations S3-S8.

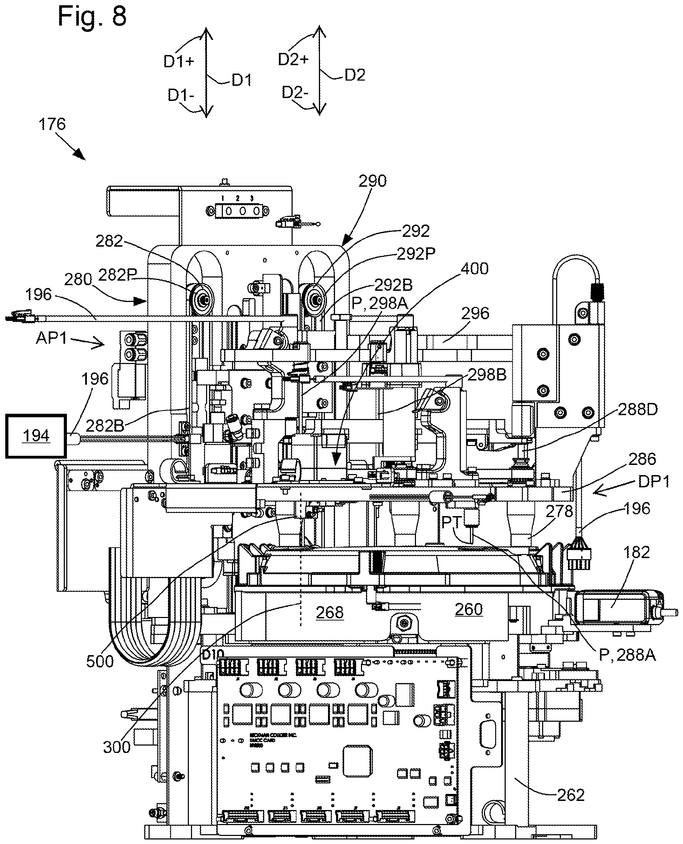

Station S10 receives a probe P of a probe assembly 288B which dispenses fluid into the vessel 320. The station S10 further includes a spin-mixer 278 (see Figures 8, 12, and 13) which may be used to spin-mix contents within the vessel 320. Stations S11-S16 are magnetic stations similar to the magnetic stations S3-S9. Station S17 receives a probe P of probe assembly 298B which aspirates fluid from the vessel 320. The station S17 is also a magnetic station, like the magnetic stations S3-S9 and S11-S16.

Station S18 receives a probe P of a probe assembly 288C which dispenses fluid into the vessel 320. Like the station S10, the station S18 includes a spin-mixer 278 and thereby spin-mixes the contents of the vessel 320. Stations S19-S24 are magnetic stations, like magnetic stations S3-S9 and S11-S17. Station S25 receives a probe P of a probe assembly 298C and thereby aspirates fluid from the vessel 320. Station S25 is also a magnetic station, like magnetic stations S3-S9, S11-S17, and S19-S24.

Station S26 receives a probe P of a probe assembly 288D which dispenses a substrate into the vessel 320. Like the stations S10 and S18, the station S26 includes a spin-mixer 278 and thereby spin-mixes the contents of the vessel 320. From the station S26, the carrier 270 advances the vessel 320 to the station S0. As mentioned above, no function occurs at station S0, other than the transport of the vessel 320.

As mentioned above, upon the carrier 270 indexing the vessel 320 from the station S0 to the station S1, the vessel 320 is ready to be removed from the carrier 270. In particular, the reaction vessel transfer unit 174 may retrieve the vessel 320 from the station S1 of the carrier arrangement 260 of the wash unit 176 and bring the vessel 320 to a station S of the incubator.

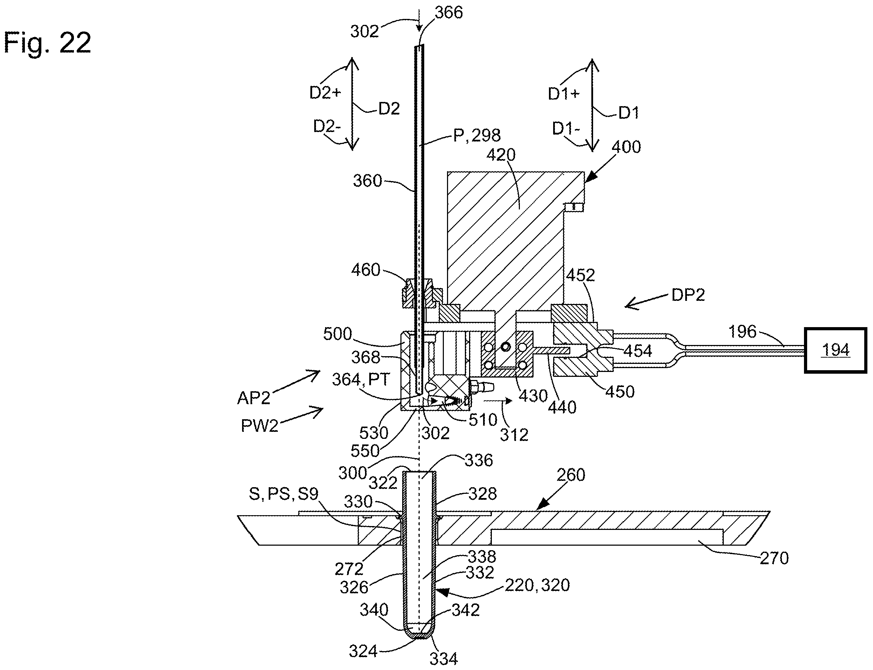

Turning now to Figures 12 and 22, the interface between the example vessel 320 and the holder 272 will now be described in detail. As illustrated at Figure 12, each of the holders 272 includes a through hole 274 that extends through the carrier 270. At a top side of the through hold 274, a counter bore 276 into the carrier 270 provides a recess. The through hole 274 and the counter bore 276 are axisymmetric with each other.

Turning now to Figure 22, the example vessel 320 will be described in detail. The example vessel 320 extends between a first end 322 and a second end 324. The example vessel 320 further includes an exterior 326. The exterior 326 includes a first exterior portion 328 adjacent to the first end 322. The exterior 326 further includes a flange portion 330 adjacent to the first exterior portion 328 but opposite the first end 322 about the first exterior portion 328. The exterior 326 further includes a second exterior portion 332. The second exterior portion 332 is adjacent the flange portion 330. The exterior 326 further includes a third exterior portion 334 adjacent the second exterior portion 332 and adjacent the second end 324 opposite the second exterior portion 332. The third exterior portion 334 is rounded adjacent the second end 324. At the first end 322, the example vessel 320 includes an opening 336. An interior 338 of the example vessel 320 may be accessed via the opening 336. The interior 338 includes a bottom portion 340. The bottom portion 340 includes a bottom 342 of the interior 338.

As mentioned above, the example vessel 320 is substantially axisymmetric. The first exterior portion 328, the second exterior portion 332, and the interior 338, excluding the bottom portion 340, are substantially cylindrical, but may include draft for molding purposes and/or other purposes. When inserting the example vessel 320 into the holder 272, the rounded third exterior portion 334 may assist in guiding the vessel 320 into the holder 272. Upon further insertion of the example vessel 320 into the holder 272, the flange portion 330 of the vessel 320 abuts a bottom of the counter bore 276 of the holder 272 and thereby seats the vessel 320 in the holder 272. A small radial clearance is present between the second exterior portion 332 and the through hole 274 and thereby allows the vessel 320 to spin within the holder 272 when spin-mixing occurs.

Turning again to Figure 10, the carrier arrangement 260 of the wash unit 176 will be described in further detail. The carrier arrangement 260 is attached to the wash unit 176. In particular, the frame 262 of the carrier arrangement 260 is fixedly attached to a frame of the wash unit 176. The rotational movement of the carrier 270 is accomplished by a drive 264 (see Figures 7, 9, and 10). The drive 264 includes a motor 264M, a pulley 264P, and a belt 264B. The carrier 270 rotates about the Axis A1 of a hub 266. The belt 264B engages a pulley (not shown) of the hub 266. Thus, when the motor 264M rotates, the carrier 270 also rotates. The motor 264M is connected to the computer 194 by a wiring harness 196. The motor 264M may further be connected to a power supply by the wiring harness 196. The computer 194 thereby controls rotation of the motor 264M and thereby further controls the rotational movement of the carrier 270. As illustrated at Figures 7 and 8, the carrier arrangement 260 further includes a housing 268 that substantially covers the carrier 270 and the vessels 320 held thereby. However, access holes are provided through the housing 268 to provide access to certain stations S.

Turning now to Figures 7-9 and 11-14, actuation of the first probe arrangement 280 and the second probe arrangement 290 will be described in detail. In the example embodiment, the first probe arrangement 280 and the second probe arrangement 290 are actuated by linear actuators. In other embodiments, the actuation may be non-linear (e.g., rotational). As illustrated at Figures 7, 8, 11-14, and 20-22, a displacement D 1 of the first probe arrangement 280 and a displacement D2 of the second probe arrangement 290 are defined. In the example embodiment, displacements D1 and D2 are vertical. In other embodiments, the displacements D1 and/or D2 may be non-vertical. A sign convention has been defined with respect to the displacements D1 and D2. In particular, a first direction D1+ and an opposite second direction D1- has been defined for displacement D1. Likewise, a first direction D2+ and a second direction D2- has been defined with respect to displacement D2. As depicted, directions D1+ and D2+ are upward, and directions D1- and D2- are downward.

The first probe arrangement 280 is actuated by a first actuator 282. Similarly the second probe arrangement 290 is actuated by a second actuator 292. The first actuator 282 includes a pulley 282P and a belt 282B. Likewise, the second actuator 292 includes a pulley 292P and a belt 292B. The first actuator 282 actuates a first probe platform 286 (e.g., a frame, a moveable frame, a mounting platform, etc.), and the second actuator 292 actuates a second probe platform 296 (e.g., a frame, a moveable frame, a mounting platform, etc.). In particular, the first probe platform 286 includes a platform attachment 286B that attaches to the belt 282B, and the second probe platform 296 includes a platform attachment 296B that attaches to the belt 292B. As illustrated at Figure 7, a first guide 284 (e.g., a first linear rail, a first linear bearing, etc.) is provided to guide the first probe arrangement 280 along displacement D1, and a second guide 294 (e.g., a second linear rail, a second linear bearing, etc.) is provided to guide the second probe arrangement 290 along the displacement D2. The first probe platform 286 includes a platform attachment 286A to attach to the moving portion of the first guide 284. Likewise, the second probe platform 296 includes a platform attachment 296A that attaches to the moving portion of the second guide 294. The actuators 282 and/or 292 may be powered by a motor that is connected to the computer 194 by a wiring harness 196. The actuators 282 and/or 292 and/or the motors that power them may be further connected to a power supply by the wiring harness 196.

The first probe arrangement 280 may thereby be actuated to various positions along displacement D1. In particular, Figures 7, 8, and 13 illustrate a first actuated position or range of positions DP1 of the first probe arrangement 280. Figures 11 and 22 illustrate a second actuated position or range of positions DP2 of the first probe arrangement 280. Figures 12, 14, 20, and 21 illustrate a third actuated position or range of positions DP3 of the first probe arrangement 280. The actuated position DP1 is a stowed position. The actuated position DP2 is used when positioning a wash station arrangement 400 at a washing position. Thus, in the depicted embodiment, the wash station arrangement 400 is positioned with the first probe arrangement 280 and washes probes P of the second probe arrangement 290. In other embodiments, the wash station arrangement 400 may be fixedly located with respect to the frame 262 of the carrier arrangement 260 and thereby be fixedly located with respect to the frame of the instrument 100 and thereby be located independent of the first probe arrangement 280. The actuated position DP3 is illustrated at Figures 12, 14, 20, and 21. The actuated position DP3 is a deployed position. In the depicted embodiment, the actuated position DP3 is a dispensing position. As illustrated at Figure 12, the spin-mixers 278, including a drive system with pulleys 278P, are rotationally mounted on the first probe platform 286. The actuated position DP3 is further a deployed position for the spin-mixers 278.

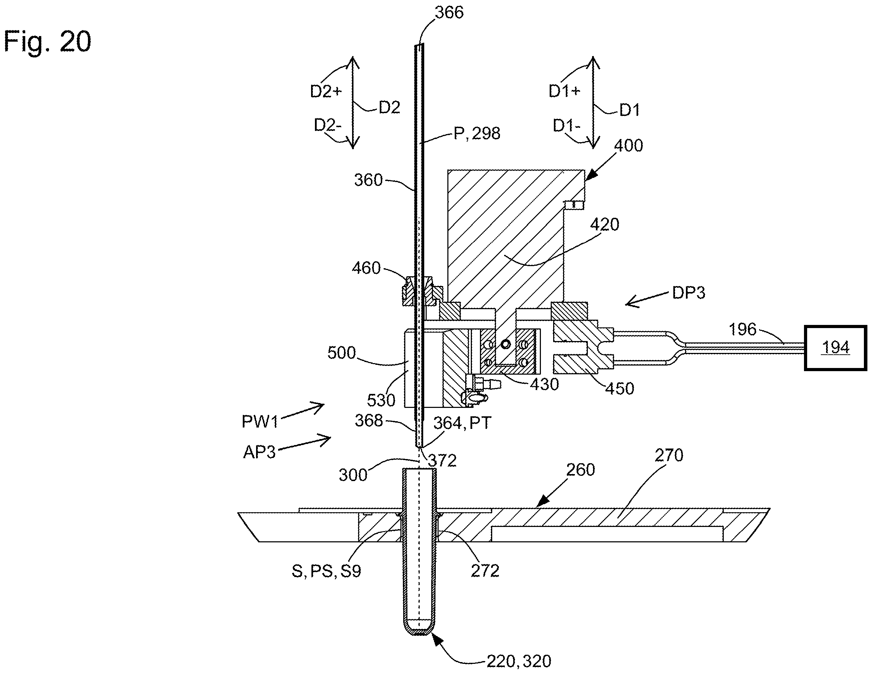

The second probe arrangement 290 may also be actuated to a plurality of positions. In particular, the second probe arrangement 290 may be actuated along displacement D2 to a first actuated position or range of positions AP1, a second actuated position (e.g., a washing position) or range of positions AP2, a third actuated position or range of positions AP3, and a fourth actuated position (e.g., an operating position) or range of positions AP4. As illustrated at Figures 7, 8, and 13, the first actuated position AP1 is a stowed position. As illustrated at Figures 11 and 22, the second actuated position AP2 is a probe wash position. As illustrated at Figure 20, the third actuated position AP3 is an approach position or a retreat position where probe assemblies 298A, 298B, and/or 298C are approaching toward or retreating from the vessel 320. The fourth actuated position AP4 is illustrated at Figures 12, 14, and 21. The fourth actuated position AP4 is an aspirating position.

As mentioned above, in certain embodiments, the actuated positions AP1, AP2, AP3, AP4, DP1, DP2, and DP3 may vary within a range of position. For example, when aspirating, a probe tip PT may follow a fluid level within the vessel 320 down as fluid is removed from the vessel 320. Thus, the aspirating position AP4 moves in the direction D2- as aspirating progresses.

As mentioned above, the first probe arrangement 280 includes probe assemblies 288A, 288B, 288C, and 288D. In the discussion below, probe assemblies 288A, 288B, 288C, and 288D may be generically referred to as probe assembly 288. Likewise, the second probe arrangement 290 includes probe assemblies 298A, 298B, and 298C. Probe assemblies 298A, 298B, and 298C may be generically referred to as probe assembly 298.

In describing the details of the wash station arrangement 400, the probe assembly 298 is described and illustrated. The wash station arrangement 400 may be adapted to the various other probes P, described and/or mentioned herein.

The probe assembly 298 is attached to the probe platform 296 of the probe arrangement 290 at a platform attachment 296P. In the depicted embodiment, the platform attachment 296P is spring-loaded and thereby provides protection to the probe assembly 298 during a collision. Such collisions are typically inadvertent. In other embodiments, the platform attachment 296P may fixedly attached the probe assembly 298 to the probe platform 296. As the probe assembly 298 is attached to the probe platform 296, the probe assembly 298 follows the probe platform 296 when the probe arrangement 290 is actuated. In the example embodiment, the probe platform 296 is guided along linear displacement D2. Thus, the probe assembly 298 also moves along displacements D2.

As illustrated at Figures 7, 8, 11-14, and 20-22, a probe path 300 is defined when the probe arrangement 290 moves along displacements D2. At Figures 7 and 8, the probe path 300 is shown as though a hidden line and therefor projects through various components that are in front of it. In normal operation of the depicted example analyzer 100, the probe path 300 includes a single degree-of-freedom. In other embodiments, the probe path 300 may be driven by multiple actuators and thereby include multiple degrees-of-freedom. The single degree-of-freedom of the depicted embodiment is sufficient to provide actuation to the probe assembly 298 for accessing the various probe receiving stations PS of the carrier arrangement 260 (see Figure 10). However, the carrier arrangement 260 does not include probe washing accommodation in the depicted embodiment. To accommodate the single degree-of-freedom of the probe assembly 298, the wash station arrangement 400 includes a degree-of-freedom to move a probe washer 500 of the wash station arrangement 400 into and out of the probe path 300 and thereby allow washing of the probe assembly 298 when the probe washer 500 of the wash station arrangement 400 is on the probe path 300 and further allow the probe assembly 298 to reach the probe receiving stations PS of the carrier arrangement 260.

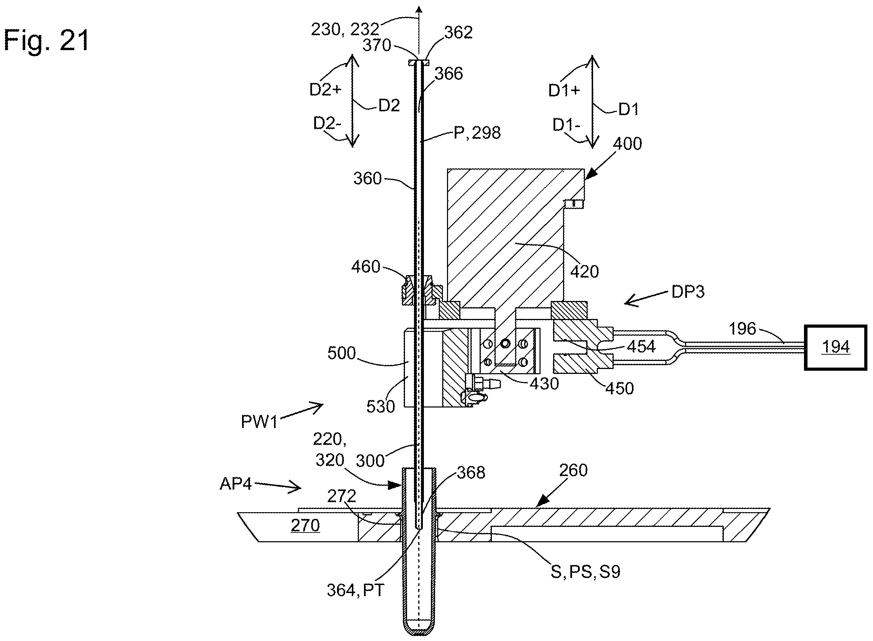

Turning now to Figures 20-22, the probe assembly 298 will be described in detail. The probe assembly 298 includes a probe body 360 that extends from a proximal end 362 to a distal end 364. The probe body 360 is tubular (i.e. hollow) in the depicted embodiment. The probe body 360 is substantially cylindrical in the depicted embodiment. The distal end 364 of the probe body 360 coincides with the probe tip PT. The probe body 360 includes an internal portion 366 and an external portion 368, and the probe P is thereby a hollow probe. The internal portion 366 provides a passage through the probe body 360 from the proximal end 362 to the distal end 364. An opening 370 (see Figure 21) at the proximal end 362 provides access to the internal portion 366, and an opening 372 (see Figure 20) at the distal end 364 provides access to the internal portion 366.

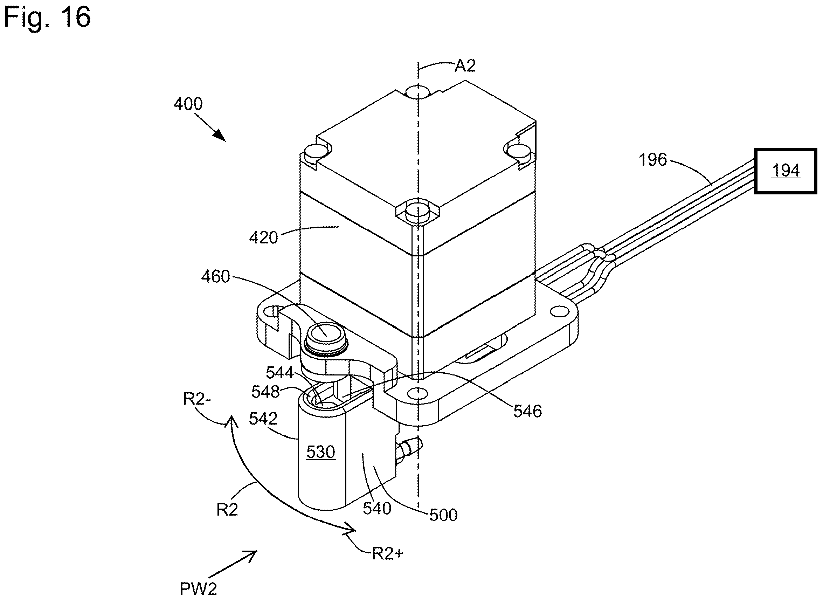

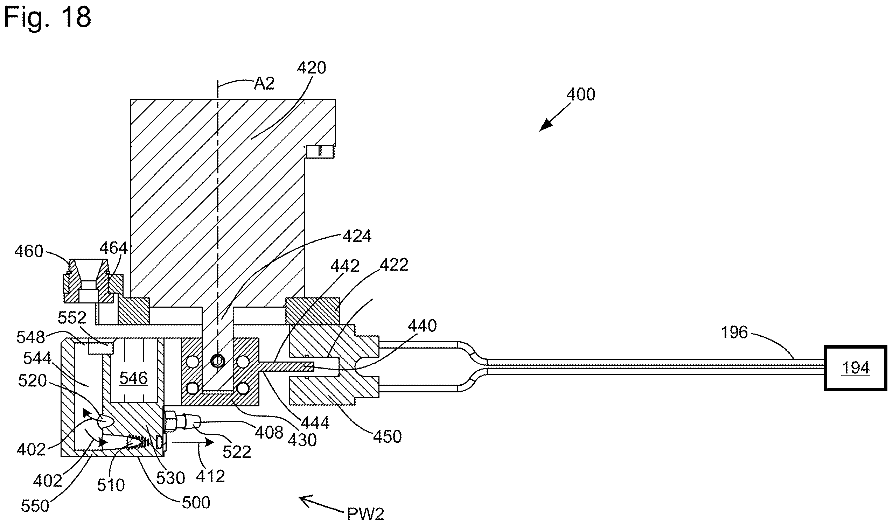

Turning now to Figures 15-19, the wash station arrangement 400 will now be described in detail, according to the principles of the present disclosure. The wash station arrangement 400 includes an actuator 420. In the depicted embodiment, the actuator 420 is a rotational motor (e.g., a stepper motor, a pneumatic motor, etc.). In other embodiments, the actuator may be linear (e.g., a linear motor, a pneumatic cylinder, a solenoid, etc.). As illustrated at Figures 15 and 16, the actuator 420 rotates about an axis A2 which provides a single degree-of-freedom between the probe washer 500 and a mount 422 of the actuator 420. The actuator 420 includes a rotating shaft 424. A probe washer 500 is connected to the shaft 424 by a probe washer mount 430. In the depicted embodiment, the actuator 420 may thereby position the probe washer 500 in a first probe washer position PW1 (see Figure 15). The actuator 420 may further position the probe washer 500 at a second probe washer position PW2 (see Figure 16). The probe washer position PW1 is further illustrated at Figures 12, 14, 15, 19, 20, and 21. The probe washer position PW2 is further illustrated at Figures 11, 13, 16, 17, 18, and 22. As depicted, the probe washer position PW1 is a stowed position (e.g., a non-engaging position) and thereby clears the probe washer 500 from the probe path 300. The probe washer position PW2 (e.g., an engaging position) positions the probe washer 500 at a deployed position and thereby positions the probe washer 500 to intersect the probe path 300. In particular, the probe path 300 intersects a wall 550 (i.e., a floor, a panel, a barrier, etc.) of the probe washer 500 (see Figures 18, 22, and 23) when the probe washer 500 is at the probe washer position PW2, in the depicted embodiment.

As illustrated at Figures 15 and 16, a rotational displacement R2 guides the probe washer 500 between the probe washer positions PW1 and PW2. A sign convention is illustrated at Figures 15 and 16. In particular, a first direction R2+ and a second direction R2- are illustrated. As viewed at Figures 15 and 16, the rotational direction R2+ is counterclockwise (CCW), and the second direction R2- is clockwise (CW), in the depicted embodiment.

Turning now to Figures 15-23, the probe washer 500 will be described in detail, according to the principles of the present disclosure. The probe washer 500 may be the same as or similar to the probe washer 130, described above. The probe washer 500 may include various features of the probe washer 130, described and illustrated herein. The probe washer 500 may further interact with various elements that the probe washer 130 interacts with, including the probe P itself, as described and illustrated herein. As illustrated at Figures 18, 22, and 23, the probe washer 500 includes a drain 510. The probe washer 500 may include a fitting 512 to connect the drain 510 to tubing 410. The probe washer 500 further includes an inlet 520, as illustrated at Figure 18. The probe washer 500 may further include a fitting 522 to connect the inlet 520 to tubing 410.

The depicted probe washer 500 further includes a housing 530. As illustrated at Figure 17, the housing 530 extends between a first end 532 and a second end 534. The housing 530 further extends between a first side 536 and a second side 538. As illustrated at Figure 16, the housing 530 further extends between a third side 540 and a fourth side 542. The housing 530 defines a cleaning cavity 544 and an overflow cavity 546. The cleaning cavity 544 and/or the overflow cavity 546 are accessible via an opening 548. As depicted, the opening 548 is at the first end 532 of the housing 530. As illustrated at Figures 18, 22, and 23, the wall 550 is defined at the second end 534 of the housing 530. As illustrated at Figures 15 and 16, an overflow channel 552 may be defined between the cleaning cavity 544 and the overflow cavity 546. If fluid enters the overflow cavity 546 (e.g., via the overflow channel 552 from the cleaning cavity 544), an overflow condition may be indicated and detected by the instrument 100. The instrument 100 may report the overflow condition to an operator and/or a maintenance notification. In such an overflow condition, a fault may be present (e.g., excessive cleaning fluid flow, a blocked drain, etc.) which causes continued flow to the overflow cavity 546. The overflow cavity 546 may include a sufficient cavity volume to accommodate the overflow condition for a given period of time during such a fault and thereby avoid improperly releasing the cleaning fluid from the probe washer 500. Thus, in embodiments with fluid detection in the overflow cavity 546 and in embodiments without fluid detection in the overflow cavity, the overflow cavity 546 may provide a time buying measure. In particular, the given period of time accommodated by the overflow cavity 546 may allow a fault to be addressed before release of fluid from the probe washer 500.

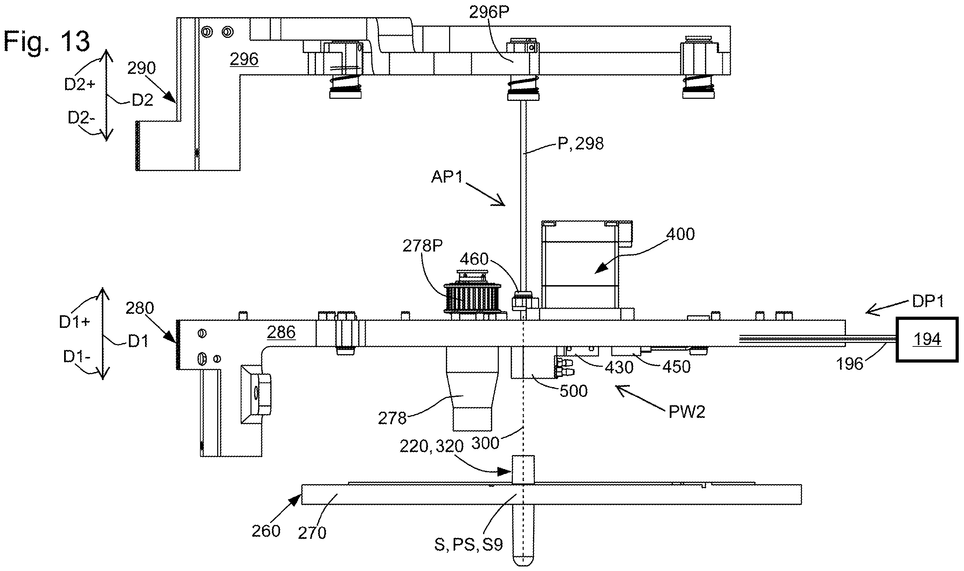

Turning now to Figures 13 and 17-23, the probe washer mount 430 will be described in detail. The probe washer mount 430 extends between a first end 432 and a second end 434. The probe washer mount 430 further extends between a first side 436 and a second side 438. The probe washer mount 430 defines a sensor flag 440 (see Figures 18, 22, and 23). The sensor flag 440 defines a first side 442 and a second side 444. The probe washer mount 430 further includes a shaft mount 446. The probe washer mount 430 attaches to the probe washer housing 530. In particular, the first side 436 of the probe washer mount 430 attaches to the second side 538 of the housing 530 (see Figure 17). The probe washer mount further attaches to the shaft 424 of the actuator 420. In particular, the shaft mount 446 is fixedly mounted to the shaft 424 of the actuator 420.

The actuator 420 may be sensed and/or controlled by the computer 194. The wiring harness 196 may connect the computer 194 to the actuator 420. The actuator 420 may further be connected to a power supply by the wiring harness 196. The wash station arrangement 400 may further include a washer position sensor 450. As depicted, the washer position sensor 450 includes a mount 452 and is thereby attached to the mount 422 of the actuator 420. The washer position sensor 450 further includes a slot 454. The sensor flag 440 of the probe washer mount 430 is positioned within the slot 454 and the washer position sensor 450 can thereby determine the position of the probe washer 500 including the positions PW1 and PW2. The washer position sensor 450 may communicate the position of the probe washer 500 to the computer 194 via the wiring harness 196.

As depicted, the mount 422 of the actuator 420 is further attached to the probe platform 286 and thereby moves with the probe platform 286 (e.g., when actuated by the actuator 282). As the actuator 420 provides a single degree-of-freedom between the probe washer 500 and the mount 422 of the actuator 420, a single degree-of-freedom exists between the probe washer 500 and the probe platform 286. As depicted, the actuator 282 provides a single degree-of-freedom between the probe platform 286 and the frame 108 of the instrument 100. Therefore, the actuator 282 and the actuator 420 together provide two degrees-of-freedom between the probe washer 500 and the frame 108 of the instrument 100. In the depicted embodiment, these two degrees-of-freedom are parallel with each other. In other embodiments, they may be perpendicular or non-parallel with each other. In other embodiments, the probe platform 286 may not necessarily serve as a probe platform, but still serve as a frame for the purpose of carrying the wash station arrangement 400.

In other embodiments, the mount 422 of the actuator 420 may be directly or indirectly attached to the frame 108 of the instrument 100. The actuator 420 may thereby be fixedly mounted to the frame 108 of the instrument 100. In such embodiments, the actuator 420 provides a single degree-of-freedom between the probe washer 500 and the mount 422 of the actuator 420 and thereby provides a single degree-of-freedom between the probe washer 500 and the frame 108 of the instrument 100.

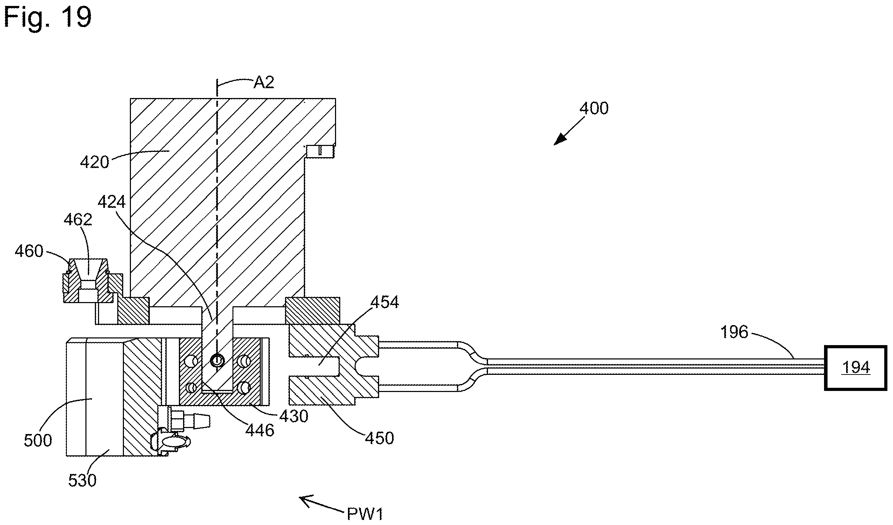

As depicted at Figures 13-23, the mount 422 also includes or has mounted to it a probe guide 460. The probe guide 460 includes a hole 462 (e.g., a self-aligning hole), as illustrated at Figure 19. As illustrated at Figure 18, the probe guide 460 includes a mount 464 that may mount the probe guide 460 to the mount 422 of the actuator 420. In other embodiments, the probe guide 460 may be otherwise mounted. As illustrated at Figures 20-23, the probe guide 460 may guide the probe P, 298 and thereby keep the probe P, 298 on the probe path 300. The hole 462 of the probe guide 460 may nominally contact the probe body 360. In other embodiments, the hole 462 may nominally clear the probe body 360 but provide guidance in non-normal operation (e.g., during a collision involving the probe P, 298).

Turning now to Figure 12, certain plumbing related to the probe assembly 298 will be described in detail. As depicted, the proximal end 262 of the probe body 360 is connected to various plumbing. For use as an aspirate probe assembly 298, the plumbing includes a pump 316 (e.g., a vacuum pump) to aspirate fluid from the vessel 320. The aspirated fluid is thereby pumped to a waste fluid disposal 314.

A back-flow cleaning function may be provided for cleaning the internal portion 366 of the probe body 360. The back-flow cleaning function employs a cleaning fluid flow direction that is generally opposite the fluid flow direction of the primary function of the probe P. As the probe 298 is an aspirating probe, the fluid flow direction of the primary function of the probe 298 is upward when aspirating fluid from the vessel 320. To provide the back-flow cleaning function for the internal portion 366 of the probe body 360 of the aspirating probe 298, a cleaning fluid supply 304 and a pump 306 may be provided. A valve 308 or a plurality of valves may be provided to separate the back-flow cleaning function from the aspirating function.

As illustrated at Figures 12 and 22, cleaning fluid 302 is pumped through the tubing 310 and into the opening 370 (see Figure 21) at the proximal end 362 of the probe body 360. The cleaning fluid 302 thereby passes through and washes the internal portion 366 of the probe body 360. The cleaning fluid 302 exits the internal portion 366 at the opening 372 (see Figure 20) at the distal end 364 of the probe body 360 and enters the cleaning cavity 544. The cleaning fluid 302 may swirl around within the cleaning cavity 544 and may further perform external cleaning. The cleaning fluid 302 exits the drain 510 of the probe washer 500 and thereby exits the cleaning cavity 544. As illustrated at Figure 17, the fitting 512 connects the drain 510 to the tubing 410 and thereby to a pump 416 which pumps waste fluid 312 out of the cleaning cavity 544 (see Figure 22). The pump 416 pumps the waste fluid 312 to a waste fluid disposal 414.

A forward-flow cleaning function may be provided for cleaning the internal portion 366 of the probe body 360. The forward-flow cleaning function employs a cleaning fluid flow direction that is generally the same as the fluid flow direction of the primary function of the probe P. If the probe P, illustrated at Figure 22 were a dispense probe, then the fluid flow direction of the primary function of the probe P would be downward when dispensing fluid into the vessel 320. Thus, the forward-flow internal cleaning function may be provided for dispense probes, as illustrated at Figure 22.

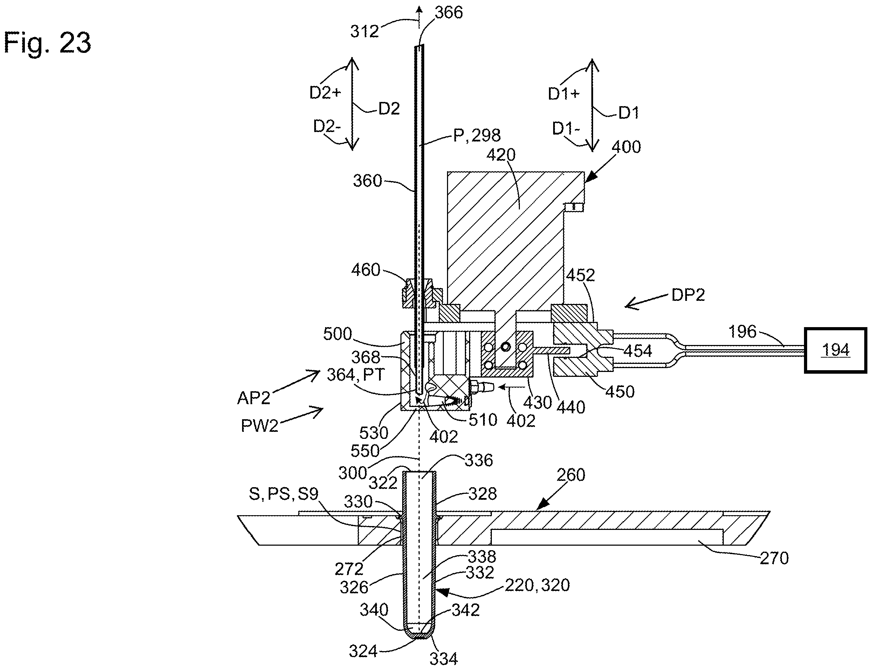

As illustrated at Figures 17 and 23, a forward-flow cleaning function may be provided for cleaning the internal portion 366 of the probe body 360 for the aspirating probe 298. As the forward-flow cleaning function employs a cleaning fluid flow direction that is generally the same as the fluid flow direction of the primary function of the probe 298, the fluid flow direction of the forward-flow cleaning function and the primary function of the probe 298 is upward, as when aspirating fluid from the vessel 320 (see Figures 21 and 23).

To provide the forward-flow cleaning function for the internal portion 366 of the probe body 360, a cleaning fluid supply 404 and a pump 406 may be provided (see Figure 17). In particular, cleaning fluid 402 is pumped through the tubing 410 and into the cleaning cavity 544 through the inlet 520 (see Figure 18). The cleaning fluid 402 may swirl around within the cleaning cavity 544 and may further perform external cleaning. The pump 316 (e.g., the vacuum pump) may aspirate fluid from the cleaning cavity 544 in the same or a similar way as aspirating fluid from the vessel 320. The probe P may thereby drain the cleaning fluid 402 from the cleaning cavity 544. The cleaning fluid 402 may thereby enter the opening 372 (see Figure 20) at the distal end 364 of the probe body 360 and be drawn up through the internal portion 366 of the probe body 360 and expelled through the opening 370 (see Figure 21) at the proximal end 362 of the probe body 360. Upon exiting the opening 370, the waste fluid 312 (see Figure 23) may enter tubing 310 and be pumped by the pump 316 to the waste fluid disposal 314 (see Figure 12).

A back-flow cleaning function may be similarly provided for cleaning the internal portion 366 of the probe body 360. The back-flow cleaning function employs a cleaning fluid flow direction that is generally opposite the fluid flow direction of the primary function of the probe P. If the probe P, illustrated at Figure 23 were a dispense probe, then the fluid flow direction of the primary function of the probe P would be downward when dispensing fluid into the vessel 320. Thus, the back-flow internal cleaning function may be provided for dispense probes, as illustrated at Figure 23.

The forward-flow cleaning functions, described above, may reduce carryover. In particular, in forward-flow cleaning the aspirating probe 298 is also aspirating during the washing cycle, which allows for cleaning of the internal portion 366 of the probe body 360 without pushing contaminants in the probe 298 down into the cleaning cavity 544 or closer to the probe tip PT. Similarly, a forward-flow cleaning function does not send contamination upstream in a dispense probe.

The wash station arrangement 400 may further provide external cleaning of the probe body 360. In particular, the wash station arrangement 400 may provide external cleaning to an external portion 368 of the probe body 360. The external portion 368 may be adjacent to the distal end 364 of the probe body 360. Turning now to Figures 17 and 18, the external cleaning of the probe body 360 will be described in detail. As mentioned above, the wash station arrangement 400 includes the cleaning fluid supply 404, and the pump 406 pumps cleaning fluid 402 from the cleaning fluid supply 404 into the inlet 520 of the probe washer 500 (see Figure 18). The cleaning fluid 402 thereby enters the cleaning cavity 544 and exposes the external portion 368 to the cleaning fluid 402 (see Figures 18 and 22). A nozzle 408 may be incorporated to provide a desired spray pattern into the cleaning cavity 544. The cleaning fluid 402 may swirl around within the cleaning cavity 544 and may thereby perform external cleaning. The cleaning fluid 402 exits the cleaning cavity 544 through the drain 510. The pump 416 may pump the waste fluid 412 that exits the drain 510 to the waste fluid disposal 414.

The external and the back-flow internal cleaning of the probe body 360, described above, may be done simultaneously. In particular, the drain 510 may carry the waste fluid 412 and the waste fluid 312. In the illustrated embodiment, a single drain 510 is illustrated. In other embodiments, multiple drains may be employed.

The external and the forward-flow internal cleaning of the probe body 360, described above, may be done simultaneously. In particular, the probe P, for example via the opening 370 (see Figure 21), may function to drain the waste fluid 312, 412 from the cleaning cavity 544. The drain 510 may additionally drain the waste fluid 312, 412 from the cleaning cavity 544. The probe P may function to drain the waste fluid 312, 412 from the cleaning cavity 544 as an alternative to or in combination with the drain 510.

The various features of the various embodiments may be combined in various combinations with each other and thereby yield further embodiments according to the principles of the present disclosure.

Various modifications and alterations of this disclosure will become apparent to those skilled in the art without departing from the scope of this disclosure, and it should be understood that the scope of this disclosure is not to be unduly limited to the illustrative embodiments set forth herein, the scope of the invention being defined by the appended claims.

## Claims

1. A sample analysis system interacting with one or more receptacles (220, 320) to receive, transfer, transform, or analyze a sample, the sample analysis system comprising:
at least two stations (S);
a carrier (270) for transporting at least one receptacle (220, 320) between the at least two stations (S);
a hollow probe (P) for aspirating and/or dispensing fluid from/into the at least one receptacle (220, 320) when the at least one receptacle (220, 320) is at a probe receiving station (PS) of the at least two stations (S), the hollow probe (P) movable along a probe path (300);
wherein the hollow probe (P) and the probe path (300) are continuously aligned with the probe receiving station (PS);
a probe washer (500) for cleaning the hollow probe (P), the probe washer (500) moveable between at least a first position (PW1) and a second position (PW2);
wherein when the probe washer (500) is at the first position (PW1), the probe path (300) clears the probe washer (500) and thereby allows the hollow probe (P) to travel past the probe washer (500) to the receptacle (220, 320) at the probe receiving station (PS); and
wherein when the probe washer (500) is at the second position (PW2), the probe washer (500) intersects the probe path (300) for the hollow probe (P) to travel into the probe washer (500).

2. The sample analysis system of claim 1, wherein the carrier (270) includes a rotating disk (270) with a plurality of holders (272) for transporting the at least one receptacle (220, 320).

3. The sample analysis system of any of claims 1 or 2, further comprising a wash unit (176), wherein the probe receiving station (PS) is included in the wash unit (176).

4. The sample analysis system of any of claims 1-3, wherein the probe path (300) is a linear path and/or
wherein the probe path (300) is a vertical path.

5. The sample analysis system of any of claims 1-4, wherein only one of the at least one receptacle (220, 320) occupies any station (S) of the at least two stations (S) at a time.

6. The sample analysis system of any of claims 1-5, further comprising a cleaning fluid supply (304, 404) for supplying cleaning fluid (302, 402), wherein the cleaning of the hollow probe (P) includes internal cleaning, wherein the probe washer (500) includes a drain (370, 510) and is configured to facilitate the internal cleaning of the hollow probe (P) by draining the cleaning fluid via the drain (370, 510) after the cleaning fluid (302, 402) is passed from the cleaning fluid supply (304, 404) through the hollow probe (P).

7. The sample analysis system of any of claims 1-5, further comprising a cleaning fluid supply (404) for supplying cleaning fluid (402), wherein the cleaning of the hollow probe (P) includes external cleaning, wherein the probe washer (500) includes an inlet (520) and a drain (510) and is configured to facilitate the external cleaning of the hollow probe (P) by applying the cleaning fluid (402) to at least an external portion (368) of the hollow probe (P) and draining the cleaning fluid (402) via the drain (404) after the cleaning fluid (402) is passed from the cleaning fluid supply (404) through the inlet (520).

8. The sample analysis system of any of claims 6 or 7, wherein the probe washer (500) includes a housing (530) that includes the inlet (520) and/or the drain (510) and
wherein the housing (500) further includes a wall (550) that blocks the probe path (300) when the probe washer (500) is at the second position (PW2).

9. The sample analysis system of any of claims 1-8, wherein the probe washer (500) is rotationally moveable between at least the first position (PW1) and the second position about (PW2) an axis (A2) and
wherein the axis (A2) is parallel to the probe path (300).

10. The sample analysis system of any of claims 1-8, wherein the probe washer (300) is linearly moveable between at least the first position (PW1) and the second position (PW2).

11. The sample analysis system of any of claims 1-10, wherein the probe washer (500) is moveable between at least the first position (PW1) and the second position (PW2) with a single degree-of-freedom.

12. The sample analysis system of any of claims 1-10, further comprising a main frame (108), wherein the probe washer (500) is moveable between at least the first position (PW1) and the second position (PW2) with only a single degree-of-freedom with respect to the main frame (108).

13. The sample analysis system of any of claims 1-10, further comprising a moveable frame (286) and a main frame (108),
wherein the moveable frame (286) is actuated between at least a first frame position (DP1, DP2, DP3) and a second frame position (DP2, DP3, DP1) with respect to the main frame (108), and
wherein the probe washer (500) is moveable between at least the first position (PW1) and the second position (PW2) with only a single degree-of-freedom with respect to the moveable frame (286).

14. A method of using a hollow probe (P) of a sample analysis system , the method comprising:
aspirating and/or dispensing fluid with the hollow probe (P) from/into at least one receptacle (220, 320) when the at least one receptacle (220, 320) is at a probe receiving station (PS), the aspirating and/or dispensing including moving the hollow probe (P) along a probe path (300), wherein the hollow probe (P) and the probe path (300) are continuously aligned with the probe receiving station (PS);
transporting the at least one receptacle (220, 320) between at least two stations (S) with a carrier (270), wherein one of the at least two stations (S) is the probe receiving station (PS);
cleaning the hollow probe (P) with a probe washer (500), the probe washer (500) moveable between at least a first position (PW1) and a second position (PW2);
clearing the probe washer (500) from the probe path (300) by moving the probe washer (500) to the first position (PW1);
moving the hollow probe (P) past the probe washer (500) when the probe washer (500) is at the first position (PW1);
intersecting the probe washer (500) with the probe path (300) by moving the probe washer (500) to the second position (PW2); and
moving at least a portion of the hollow probe (P) into the probe washer (500) when the probe washer (500) is at the second position (PW2).

## Patentansprüche

1. Probenanalysesystem, das mit einem oder mehreren Behältern (220, 320) interagiert, um eine Probe aufzunehmen, zu übertragen, umzuwandeln oder zu analysieren, wobei das Probenanalysesystem aufweist:
zumindest zwei Stationen (S);
einen Träger (270) zum Transportieren von zumindest einem Behälter (220, 320) zwischen den zumindest zwei Stationen (S);
eine Hohlsonde (P) zum Ansaugen und/oder Ausgeben von Fluid aus/in den zumindest einen Behälter (220, 320), wenn sich der zumindest eine Behälter (220, 320) an einer Sondenaufnahmestation (PS) der zumindest zwei Stationen (S) befindet, wobei die Hohlsonde (P) entlang eines Sondenpfads (300) bewegbar ist;
wobei die Hohlsonde (P) und der Sondenpfad (300) kontinuierlich an der Sondenaufnahmestation (PS) ausgerichtet sind;
eine Sondenwaschvorrichtung (500) zum Reinigen der Hohlsonde (P), wobei die Sondenwaschvorrichtung (500) zwischen zumindest einer ersten Position (PW1) und einer zweiten Position (PW2) bewegbar ist;
wobei, wenn sich die Sondenwaschvorrichtung (500) an der ersten Position (PW1) befindet, der Sondenpfad (300) die Sondenwaschvorrichtung (500) freigibt und somit ermöglicht, dass sich die Hohlsonde (P) an der Sondenwaschvorrichtung (500) vorbei zu dem Behälter (220, 320) an der Sondenaufnahmestation (PS) bewegt; und
wobei, wenn sich die Sondenwaschvorrichtung (500) an der zweiten Position (PW2) befindet, die Sondenwaschvorrichtung (500) den Sondenpfad (300) kreuzt, damit die Hohlsonde (P) in die Sondenwaschvorrichtung (500) hinein bewegt werden kann.

2. Probenanalysesystem nach Anspruch 1, wobei der Träger (270) eine rotierende Scheibe (270) mit einer Vielzahl von Haltern (272) zum Transportieren des zumindest einen Behälters (220, 320) einschließt.

3. Probenanalysesystem nach einem der Ansprüche 1 und 2, ferner umfassend eine Wascheinheit (176), wobei die Sondenaufnahmestation (PS) in der Wascheinheit (176) eingeschlossen ist.

4. Probenanalysesystem nach einem der Ansprüche 1 bis 3, wobei der Sondenpfad (300) ein linearer Pfad ist und/oder
wobei der Sondenpfad (300) ein vertikaler Pfad ist.

5. Probenanalysesystem nach einem der Ansprüche 1-4, wobei jeweils nur einer des zumindest einen Behälters (220, 320) eine beliebige Station (S) der zumindest zwei Stationen (S) einnimmt.

6. Probenanalysesystem nach einem der Ansprüche 1-5, ferner umfassend eine Reinigungsfluidversorgung (304, 404) zum Zuführen von Reinigungsfluid (302, 402), wobei die Reinigung der Hohlsonde (P) eine Innenreinigung einschließt, wobei die Sondenwaschvorrichtung (500) einen Abfluss (370, 510) einschließt und dazu konfiguriert ist, die Innenreinigung der Hohlsonde (P) durch Ablassen des Reinigungsfluids über den Abfluss (370, 510) zu ermöglichen, nachdem das Reinigungsfluid (302, 402) von der Reinigungsfluidversorgung (304, 404) durch die Hohlsonde (P) geleitet worden ist.

7. Probenanalysesystem nach einem der Ansprüche 1-5, ferner umfassend eine Reinigungsfluidversorgung (404) zum Zuführen von Reinigungsfluid (402), wobei die Reinigung der Hohlsonde (P) eine Außenreinigung einschließt, wobei die Sondenwaschvorrichtung (500) einen Einlass (520) und einen Abfluss (510) einschließt und dazu konfiguriert ist, die Außenreinigung der Hohlsonde (P) durch Anwenden des Reinigungsfluids (402) auf zumindest einen Außenabschnitt (368) der Hohlsonde (P) sowie durch Ablassen des Reinigungsfluids (402) über den Abfluss (404) zu ermöglichen, nachdem das Reinigungsfluid (402) von der Reinigungsfluidversorgung (404) durch den Einlass (520) geleitet worden ist.

8. Probenanalysesystem nach einem der Ansprüche 6 und 7, wobei die Sondenwaschvorrichtung (500) ein Gehäuse (530) umfasst, das den Einlass (520) und/oder den Abfluss (510) einschließt und
wobei das Gehäuse (500) ferner eine Wand (550) einschließt, die den Sondenpfad (300) blockiert, wenn sich die Sondenwaschvorrichtung (500) in der zweiten Position (PW2) befindet.

9. Probenanalysesystem nach einem der Ansprüche 1-8, wobei die Sondenwaschvorrichtung (500) zwischen zumindest der ersten Position (PW1) und der zweiten Position (PW2) um eine Achse (A2) rotierend bewegbar ist und
wobei die Achse (A2) parallel zum Sondenpfad (300) verläuft.

10. Probenanalysesystem nach einem der Ansprüche 1-8, wobei die Sondenwaschvorrichtung (300) zwischen zumindest der ersten Position (PW1) und der zweiten Position (PW2) linear bewegbar ist.

11. Probenanalysesystem nach einem der Ansprüche 1-10, wobei die Sondenwaschvorrichtung (500) zwischen zumindest der ersten Position (PW1) und der zweiten Position (PW2) mit einem einzigen Freiheitsgrad bewegbar ist.

12. Probenanalysesystem nach einem der Ansprüche 1-10, ferner umfassend einen Hauptrahmen (108) wobei die Sondenwaschvorrichtung (500) zwischen zumindest der ersten Position (PW1) und der zweiten Position (PW2) mit nur einem einzigen Freiheitsgrad in Bezug auf den Hauptrahmen (108) bewegbar ist.

13. Probenanalysesystem nach einem der Ansprüche 1-10, ferner umfassend einen bewegbaren Rahmen (286) und einen Hauptrahmen (108).
wobei der bewegbare Rahmen (286) zwischen zumindest einer ersten Rahmenposition (DP1, DP2, DP3) und einer zweiten Rahmenposition (DP2, DP3, DP1) in Bezug auf den Hauptrahmen (108) betätigt wird, und
wobei die Sondenwaschvorrichtung (500) zwischen zumindest der ersten Position (PW1) und der zweiten Position (PW2) mit nur einem einzigen Freiheitsgrad in Bezug auf den bewegbaren Rahmen (286) bewegbar ist.

14. Verfahren zum Verwenden einer Hohlsonde (P) eines Probenanalysesystems, das Verfahren umfassend:
Ansaugen und/oder Ausgeben von Fluid mit der Hohlsonde (P) aus/in zumindest einen Behälter (220, 320), wenn sich der zumindest eine Behälter (220, 320) an einer Sondenaufnahmestation (PS) befindet, wobei das Ansaugen und/oder Ausgeben das Bewegen der Hohlsonde (P) entlang eines Sondenpfads (300) einschließt, wobei die Hohlsonde (P) und der Sondenpfad (300) kontinuierlich an der Sondenaufnahmestation (PS) ausgerichtet sind;
Transportieren des zumindest einen Behälters (220, 320) zwischen zumindest zwei Stationen (S) mit einem Träger (270), wobei eine der zumindest zwei Stationen (S) die Sondenaufnahmestation (PS) ist;
Reinigen der Hohlsonde (P) mit einer Sondenwaschvorrichtung (500), wobei die Sondenwaschvorrichtung (500) zwischen zumindest einer ersten Position (PW1) und einer zweiten Position (PW2) bewegbar ist;
Entfernen der Sondenwaschvorrichtung (500) aus dem Sondenpfad (300) durch Bewegen der Sondenwaschvorrichtung (500) in die erste Position (PW1);
Bewegen der Hohlsonde (P) an der Sondenwaschvorrichtung (500) vorbei, wenn sich die Sondenwaschvorrichtung (500) in der ersten Position (PW1) befindet;
Kreuzen der Sondenwaschvorrichtung (500) mit dem Sondenpfad (300) durch Bewegen der Sondenwaschvorrichtung (500) in die zweite Position (PW2); und
Bewegen zumindest eines Abschnitts der Hohlsonde (P) in die Sondenwaschvorrichtung (500), wenn sich die Sondenwaschvorrichtung (500) in der zweiten Position (PW2) befindet.

## Revendications

1. Système d'analyse d'échantillons interagissant avec un ou plusieurs réceptacles (220, 320) pour recevoir, transférer, transformer ou analyser un échantillon, le système d'analyse d'échantillons comprenant :
au moins deux stations (S) ;
un convoyeur (270) destiné à transporter au moins un réceptacle (220, 320) entre les au moins deux stations (S) ;
une sonde creuse (P) destinée à aspirer et/ou distribuer du fluide depuis/dans l'au moins un réceptacle (220, 320) lorsque l'au moins un réceptacle (220, 320) est sur une station de réception de sonde (PS) des au moins deux stations (S), la sonde creuse (P) pouvant être déplacée le long d'un trajet de sonde (300) ;
dans lequel la sonde creuse (P) et le trajet de sonde (300) sont alignés en continu avec la station de réception de sonde (PS) ;
un système de lavage de sonde (500) destiné à nettoyer la sonde creuse (P), le système de lavage de sonde (500) pouvant être déplacé entre au moins une première position (PW1) et une deuxième position (PW2) ;
dans lequel lorsque le système de lavage de sonde (500) se trouve sur la première position (PW1), le trajet de sonde (300) ne croise pas le système de lavage de sonde (500) et permet ainsi à la sonde creuse (P) de se déplacer au-delà du système de lavage de sonde (500) au réceptacle (220, 320) sur la station de réception de sonde (PS) ; et
dans lequel, lorsque le système de lavage de sonde (500) se trouve sur la deuxième position (PW2), le système de lavage de sonde (500) croise le trajet de sonde (300) et permet ainsi à la sonde creuse (P) de se déplacer dans le système de lavage de sonde (500).

2. Système d'analyse d'échantillons selon la revendication 1, dans lequel le convoyeur (270) comporte un disque de rotation (270) avec une pluralité de supports (272) destinés à transporter l'au moins un réceptacle (220, 320).

3. Système d'analyse d'échantillons selon l'une quelconque des revendications 1 ou 2, comprenant en outre une unité de lavage (176), dans lequel la station de réception de sonde (PS) est comprise dans l'unité de lavage (176).

4. Système d'analyse d'échantillons selon l'une quelconque des revendications 1 - 3, dans lequel le trajet de sonde (300) est un trajet linéaire et/ou
dans lequel le trajet de sonde (300) est un trajet vertical.

5. Système d'analyse d'échantillons selon l'une quelconque des revendications 1 - 4, dans lequel seulement un de l'au moins un réceptacle (220, 320) occupe une station (S) quelconque des au moins deux stations (S) à la fois.

6. Système d'analyse d'échantillons selon l'une quelconque des revendications 1 - 5, comprenant en outre un système d'alimentation en fluide de nettoyage (304, 404) pour l'alimentation en fluide de nettoyage (302, 402), dans lequel le nettoyage de la sonde creuse (P) comporte le nettoyage interne, dans lequel le système de lavage de sonde (500) comporte une vidange (370, 510) et est configuré pour faciliter le nettoyage interne de la sonde creuse (P) en vidangeant le fluide de nettoyage par l'intermédiaire de la vidange (370, 510) après que le fluide de nettoyage (302, 402) est passé à travers le système d'alimentation en fluide de nettoyage (304, 04) à travers la sonde creuse (P).

7. Système d'analyse d'échantillons selon l'une quelconque des revendications 1 - 5, comprenant en outre un système d'alimentation en fluide de nettoyage (404) destiné à l'alimentation en fluide de nettoyage (402), dans lequel le nettoyage de la sonde creuse (P) comporte un nettoyage externe, dans lequel le système de lavage de sonde (500) comporte une entrée (520) et une vidange (510) et est configuré pour faciliter le nettoyage externe de la sonde creuse (P) en appliquant le fluide de nettoyage (402) sur au moins une partie externe (368) de la sonde creuse (P) et en vidangeant le fluide de nettoyage (402) par l'intermédiaire de la vidange (404) après que le fluide de nettoyage (402) est passé à travers le système d'alimentation en fluide de nettoyage (404) par l'intermédiaire de l'entrée (520).

8. Système d'analyse d'échantillons selon l'une quelconque des revendications 6 ou 7, dans lequel le système de lavage de sonde (500) comporte un boîtier (530) qui comporte l'entrée (520) et/ou la vidange (510) et
dans lequel le boîtier (500) comporte en outre une paroi (550) qui bloque le trajet de sonde (300) lorsque le système de lavage de sonde (500) se trouve sur la deuxième position (PW2).

9. Système d'analyse d'échantillons selon l'une quelconque des revendications 1 - 8, dans lequel le système de lavage de sonde (500) peut être déplacé en rotation entre au moins la première position (PW1) et la deuxième position (PW2) autour d'un axe (A2), et
dans lequel l'axe (A2) est parallèle au trajet de sonde (300).

10. Système d'analyse d'échantillons selon l'une quelconque des revendications 1 - 8, dans lequel le système de lavage de sonde (300) peut être déplacé linéairement entre au moins la première position (PW1) et la deuxième position (PW2).

11. Système d'analyse d'échantillons selon l'une quelconque des revendications 1 - 10, dans lequel le système de lavage de sonde (500) peut être déplacé entre au moins la première position (PW1) et la deuxième position (PW2) selon un unique degré de liberté.

12. Système d'analyse d'échantillons selon l'une quelconque des revendications 1 - 10, comprenant en outre un cadre principal (108), dans lequel le système de lavage de sonde (500) peut être déplacé entre au moins la première position (PW1) et la deuxième position (PW2) selon seulement un unique degré de liberté par rapport au cadre principal (108).

13. Système d'analyse d'échantillons selon l'une quelconque des revendications 1 - 10, comprenant en outre un cadre pouvant être déplacé (286) et un cadre principal (108),
dans lequel le cadre pouvant être déplacé (286) est actionné entre au moins une première position de cadre (DP1, DP2, DP3) et une deuxième position de cadre (DP2, DP3, DP1) par rapport au cadre principal (108), et
dans lequel le système de lavage de sonde (500) peut être déplacé entre au moins la première position (PW1) et la deuxième position (PW2) selon seulement un unique degré de liberté par rapport au cadre pouvant être déplacé (286).

14. Procédé d'utilisation d'une sonde creuse (P) d'un système d'analyse d'échantillons, le procédé comprenant :
l'aspiration et/ou la distribution de fluide avec la sonde creuse (P) depuis/ dans au moins un réceptacle (220, 320) lorsque l'au moins un réceptacle (220, 320) est sur une station de réception de sonde (PS), l'aspiration et/ou la distribution comportant le déplacement de la sonde creuse (P) le long d'un trajet de sonde (300), dans lequel la sonde creuse (P) et le trajet de sone (300) sont alignés en continu avec la station de réception de sonde (PS) ;
le transport de l'au moins un réceptacle (220, 320) entre au moins deux stations (S) avec un convoyeur (270), dans lequel au moins une des au moins deux stations (S) est la station de réception de sonde (PS) ;
le nettoyage de la sonde creuse (P) avec un système de lavage de sonde (500), le système de lavage de sonde (500) pouvant être déplacé entre au moins une première position (PW1) et une deuxième position (PW2) ;
le non-croisement du système de lavage de sone (500) depuis le trajet de sone (300) en déplaçant le système de lavage de sonde (500) vers la première position (PW1) ;
le déplacement de la sonde creuse (P) au-delà du système de lavage de sonde (500) lorsque le système de lavage de sonde (500) se trouve sur la première position (PW1) ;
le croisement du système de lavage de sonde (500) avec le trajet de sonde (300) en déplaçant le système de lavage de sonde (500) vers la deuxième position (PW2) ; et
le déplacement d'au moins une partie de la sonde creuse (P) dans le système de lavage de sonde (500) lorsque le système de lavage de sonde (500) se trouve sur la deuxième position (PW2).
